(19) Europäisches Patentamt / European Patent Office / Office européen des brevets

(11) **EP 2 511 822 A2**

(12) **EUROPEAN PATENT APPLICATION**

(43) Date of publication:
**17.10.2012 Bulletin 2012/42**

(51) Int Cl.:
***G06F 9/50*** *(2006.01)*

(21) Application number: **12163755.7**

(22) Date of filing: **11.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.04.2011 JP 2011091045**

(71) Applicant: **Hitachi, Ltd.**
**Chiyoda-ku**
**Tokyo (JP)**

(72) Inventors:
• **Hatasaki, Keisuke**
 **Tokyo 100-8220 (JP)**
• **Kaneda, Yasunori**
 **Tokyo 100-8220 (JP)**

(74) Representative: **Moore, Graeme Patrick et al**
**MEWBURN ELLIS LLP**
**33 Gutter Lane**
**London Greater London EC2V 8AS (GB)**

(54) **Resource management method and computer system**

(57) A resource management method executed in a computer system including a plurality of computers which provide a plurality of hosts for executing a virtualization program; and a management computer which is coupled to each of the plurality of computers via a network and manages the plurality of computers, wherein: the hosts include physical hosts and logical hosts; the management computer has a resource management unit for managing physical resources of clusters composed of a plurality of the hosts; the clusters include at least one complex clusters composed of at least one of the physical hosts and at least one of the logical hosts; and the resource management method including; a first step of specifying a target logical host configuring the complex cluster, and a second step of changing the allocated amount of the physical resources to the target logical host.

Fig.1

**Description**

CLAIM OF PRIORITY

The present application claims priority from Japanese patent application JP 2011-91045 filed on April 15, 2011, the content of which is hereby incorporated by reference into this application.

BACKGROUND OF THE INVENTION

The present invention relates to a computer system using a virtualization technology and particularly to a resource management method of a computer system using a virtualization technology and the computer system.

In a computer system using a virtualization technology, one or more virtual servers (hereinafter, referred to as VM) are operated by a server executing a server virtualization program. For example, Hyper-V and the like are known as the virtualization technology and a plurality of servers can be consolidated and an improvement in resource utilization efficiency can be realized by utilizing the virtualization technology.

In the virtualization technology, a technology for moving VMs among servers during the operation is known. By using this technology, the VMs can be so moved among the servers that VMs with a high load are not concentrated in a specific server, and loads of the servers can be equalized.

On the other hand, there is also known a multistage virtualization technology in which a logical partitioning program is implemented on one server to generate one or more logical partitions (hereinafter, referred to as LPAR), and a virtualization technology is implemented in each logical partition (JP2009-003749A).

SUMMARY OF THE INVENTION

For movements of the VMs, a "cluster" needs to be configured in which a plurality of servers share a storage. The VMs can be moved among the servers registered in the cluster. In this way, loads of specific servers can be equalized.

However, in the conventional virtualization technology, there is a limit to the number of the servers that can be registered in the cluster. Thus, a movement range of the VMs is limited to the range of the number of the serves that can be registered in the cluster. Therefore, there are cases where loads of specific severs cannot be equalized by adding a new server to the cluster.

The present invention aims to provide a virtualization technology which can equalize loads of servers in a cluster even if the number of servers which can be registered in the cluster is limited.

The present invention can be appreciated by the description which follows in conjunction with the following figures, wherein: a resource management method executed in a computer system including a plurality of computers which provide a plurality of hosts for executing a virtualization program for managing virtual machines; and a management computer which is coupled to each of the plurality of computers via a network and manages the plurality of computers. Each of the plurality of computers has a first processor, a first memory coupled to the first processor and a first I/O interface coupled to the first processor; and the management computer has a second processor, a second memory coupled to the second processor and a second I/O interface coupled to the second processor. The hosts include physical hosts in which the first processor executes the virtualization program and logical hosts in which a processor executes the virtualization program, which is allocated to a logical partition generated by logically partitioning physical resources of one of the plurality of computers. The management computer has a resource management unit for managing physical resources of clusters composed of a plurality of the hosts. The clusters include at least one complex clusters composed of at least one of the physical hosts and at least one of the logical hosts. The resource management method including; a first step of specifying, by the resource management unit, a target logical host configuring the complex cluster, in a case where physical resources for distributing loads of the hosts configuring the complex cluster are insufficient, and a second step of changing, by the resource management unit, the allocated amount of the physical resources to the target logical host.

According to the present invention, the resource amount of a cluster with insufficient physical resources can be changed without changing the number of hosts configuring the cluster. Therefore, loads of servers registered in the cluster can be equalized.

BRIEF DESCRIPTION OF THE DRAWINGS

The present invention can be appreciated by the description which follows in conjunction with the following figures, wherein:

FIG. 1 is a block diagram illustrating a configuration example of a computer system according to a first embodiment of the present invention;

FIGS. 2A and 2B are block diagrams illustrating a hardware configuration and a software configuration of a server according to the first embodiment of the present invention;

FIGS. 3A and 3B are diagrams illustrating examples of a stack of VM operating on the server according to the first embodiment of the present invention;

FIG. 4 is a diagram illustrating a configuration example of a resource management program in the first embodiment according to the present invention;

FIG. 5 is a diagram illustrating a configuration example of a resource pool according to the first embodiment of the present invention;

FIG. 6 is a table illustrating an example of a server table according to the first embodiment of the present invention;

FIG. 7 is a table illustrating an example of a cluster table according to the first embodiment of the present invention;

FIG. 8 is a diagram illustrating an example of a configuration table according to the first embodiment of the present invention;

FIG. 9 is a flow chart illustrating a resource management process performed by the resource management program according to the first embodiment of the present invention;

FIG. 10 is a sequence diagram illustrating a physical resource monitoring process according to the first embodiment of the present invention;

FIG. 11 is a diagram illustrating a method for calculating the actual resource utilization rate of the cluster according to the first embodiment of the present invention;

FIG. 12 is a flow chart illustrating a resource determination process according to the first embodiment of the present invention;

FIG. 13 is a sequence diagram illustrating a resource changing process according to the first embodiment of the present invention;

FIG. 14 is a diagram outlining the resource changing process according to the first embodiment of the present invention;

FIG. 15 is a diagram illustrating an example of an unused resource table according to a modification of the first embodiment of the present invention;

FIG. 16 is a flow chart illustrating a resource determination process according to a modification of the first embodiment of the present invention;

FIG. 17 is a sequence diagram illustrating a resource changing process according to a second embodiment of the present invention;

FIG. 18 is a flow chart illustrating a resource determination process according to a third embodiment of the present invention;

FIG. 19 is a sequence diagram illustrating a resource changing process according to the third embodiment of the present invention; and

FIG. 20 is a diagram illustration outline of the resource changing process according to the third embodiment of the present invention.

## DESCRIPTION OF THE PREFERRED EMBODIMENTS

Hereinafter, embodiments of the present invention are described with reference to the drawings.

[First Embodiment]

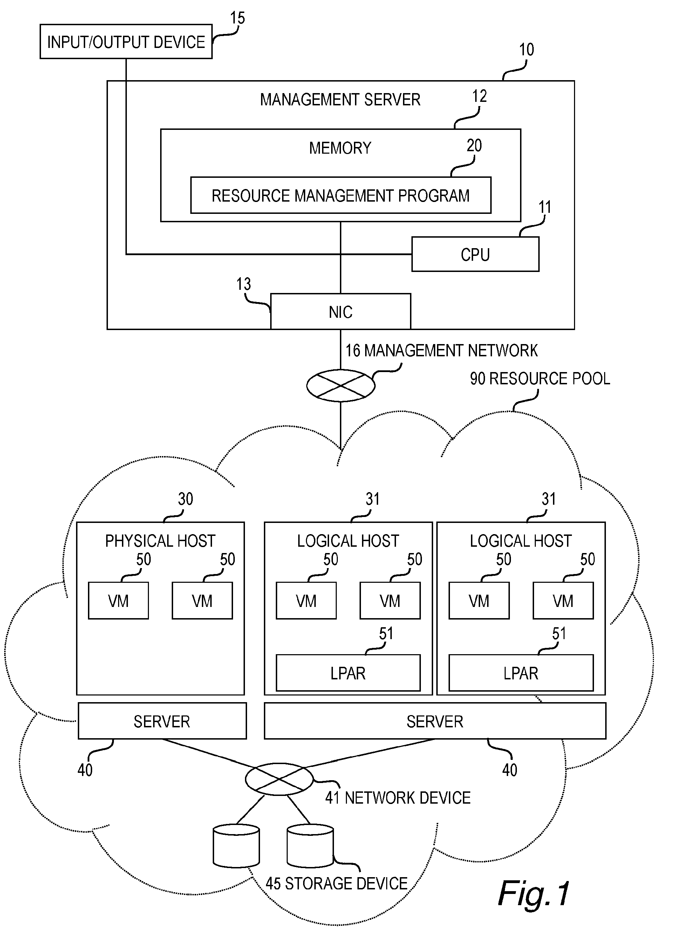

FIG. 1 is a block diagram illustrating a configuration example of a computer system according to a first embodiment of the present invention.

The computer system in this embodiment includes a management server 10, an input/output device 15, a management network 16, servers 40, a network device 41 and storage devices 45. The management server 10 and each server 40 are connected via the management network 16. Further, each server 40 is connected to the storage devices 45 via the network device 41.

The management server 10 manages the entire computer system. Further, the management server 10 manages a resource pool 90. Note that, in this embodiment, physical resources of the servers 40, the network device 41 and the storage devices 45 are managed as the resource pool 90.

The management server 10 comprises a CPU 11, a memory 12 and an NIC (Network Interface Card) 13.

The CPU 11 executes a program loaded into the memory 12. Functions of the management server 10 can be realized by the CPU 11 executing the predetermined program.

The memory 12 stores programs to be executed by the CPU 11 and information necessary to execute the programs. Specifically, the memory 12 stores a resource management program 20. Note that another program may be stored.

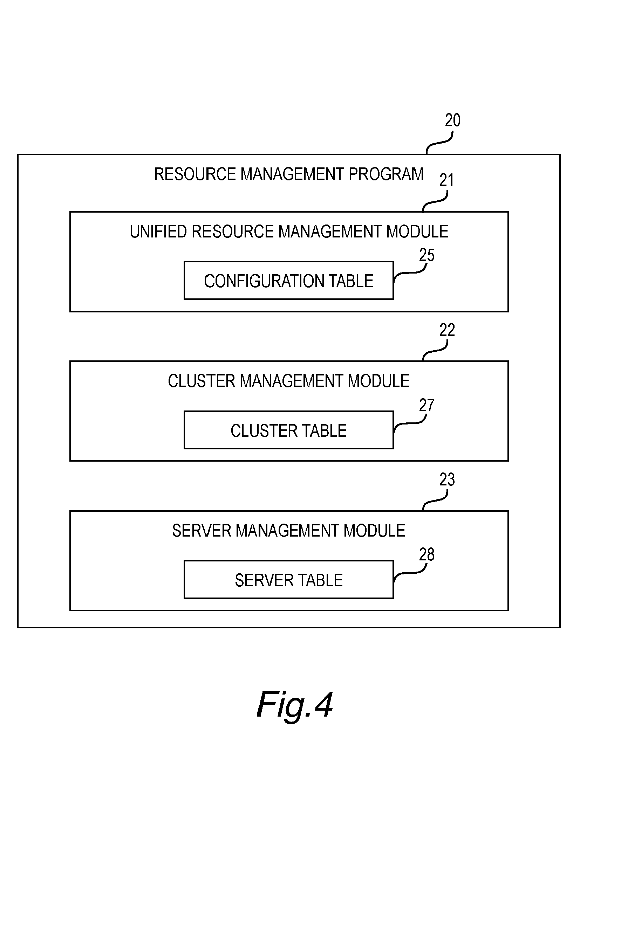

The resource management program 20 is a program for managing the resource pool 90. When a process is described below using the resource management program 20 as a subject, it indicates the execution of the resource management program 20 by the CPU 11. Note that the resource management program 20 is described in detail later using FIG. 4.

Note that functions realized by the resource management program 20 may be mounted by hardware or firmware equipped in the management server 10 or a combination of these, e.g. as a resource management unit.

The NIC 13 is an interface for connection to the servers 40 included in the resource pool 90.

Further, the input/output device 15 used to operate the management server 10 is connected to the management server 10. The input/output device 15 is a device such as a mouse, a keyboard and a display and used to input and output information between the management server 10 and an administrator.

The servers 40 provide a virtualization environment for operating a plurality of virtual machines (VMs) 50. In this embodiment, one or more VMs 50 operate on one host.

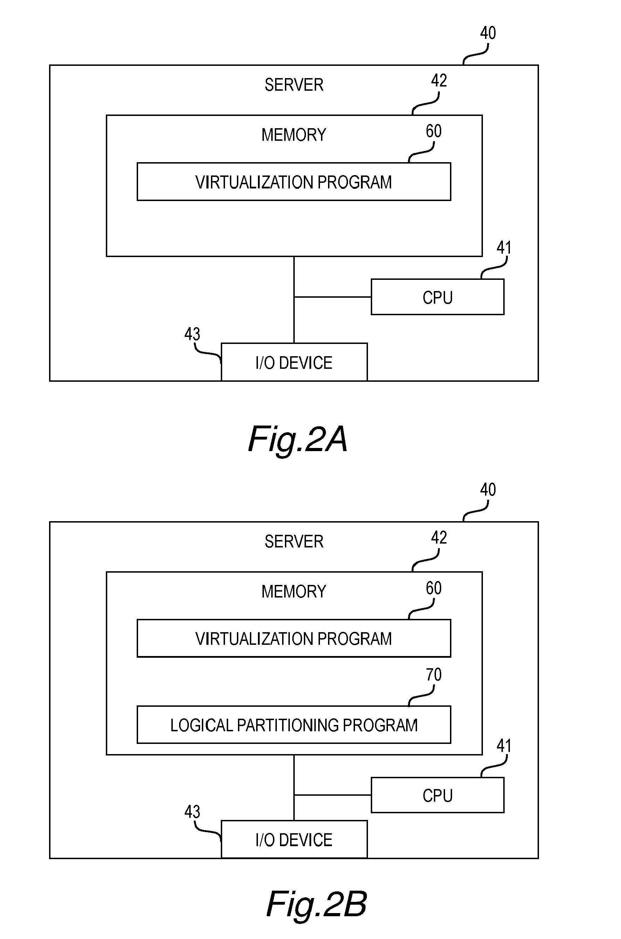

Here, the hosts mean computers (instances) which execute a virtualization program 60 (see FIGS. 2A and 2B) for managing the VMs 50. In this embodiment, the hosts include physical hosts 30 in which the virtualization program 60 (see FIGS. 2A and 2B) is directly executed on the server 40 and logical hosts 31 in which the virtualization program 60 (see FIGS. 2A and 2B) is executed on a logical partition (LPAR) 51.

The logical partition (LPAR) 51 means a logical partition generated by logically partitioning physical resources of the server 40. Note that any method may be adopted to logically partition the physical resources.

For example, a method for logically partitioning a CPU including a plurality of cores is thought to be a method for allocating each core to the LPARs 51. Further, a method for logically partitioning a memory is thought to be a method for allocating a predetermined address area to each LPAR 51.

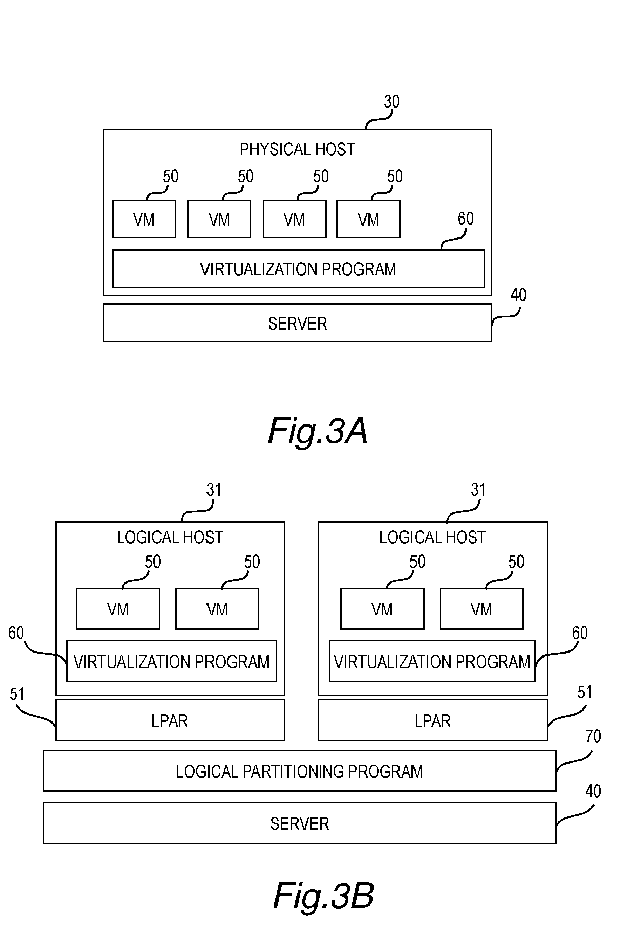

Note that the hardware configuration and the software configuration of the servers 40 are described later using FIGS. 2A and 2B. Further, the configurations of the physical host 30 and the logical host 31 are described later using FIGS. 3A and 3B.

The network device 41 connects server 40 and the storage devices 45. The network device 41 includes an FC (Fibre Channel) switch, an Ethernet network switch (Ethernet is a registered trademark, hereinafter the same), an FCoE (Fibre Channel over Ethernet) network switch and the like.

The storage devices 45 store programs to be executed by the servers 40, information necessary to implement the VMs 50, and the like. The storage device 45 includes a disk array device, an NAS (Network Attached storage), and the like. Note that a plurality of servers 40 can also share the storage device 45.

FIGS. 2A and 2B are block diagrams illustrating the hardware configuration and the software configuration of the server 40 according to the first embodiment of the present invention.

FIG. 2A illustrates the hardware configuration of the server 40 configuring the physical host 30. FIG. 2B is a block diagram illustrating the hardware configuration of the server 40 configuring the logical host 31.

The server 40 illustrated in FIG. 2A comprises a CPU 41, a memory 42 and an I/O device 43.

The CPU 41 executes a program loaded into the memory 42. Functions of the server 40 can be realized by the CPU 41 executing the predetermined program.

The memory 42 stores programs to be executed by the CPU 41 and information necessary to execute the programs. Specifically, the memory 42 stores the virtualization program 60.

The virtualization program 60 generates the VMs 50 and controls the VMs 50. When a process is described below using the virtualization program 60 as a subject, it indicates the execution of the virtualization program 60 by the CPU 41.

Note that the functions realized by the virtualization program 60 may be mounted by hardware or firmware equipped in the server 40 or a combination of these, e.g. as a virtualization unit.

The I/O device 43 is a device for connection to an external device such as the storage device 45 and, for example, thought to be an NIC, an HBA (Host Bus Adaptor), a CNA (Converged Network Adapter) or the like.

The server 40 illustrated in FIG. 2B is not described since having the same hardware configuration as the server 40 illustrated in FIG. 2A. The server 40 illustrated in FIG. 2B differs in storing a logical partitioning program 70 in the memory 42.

The logical partitioning program 70 generates one or more LPARs 51 on the server 40 and manages these LPARs 51. When a process is described below using the logical partitioning program 70 as a subject, it indicates the execution of the logical partitioning program 70 by the CPU 41.

Note that the functions realized by the logical partitioning program 70 may be mounted by hardware or firmware equipped in the server 40 or a combination of these, e.g. as a logical partitioning unit.

FIGS. 3A and 3B are diagrams illustrating examples of the stack of the VMs 50 operating on the server 40 according to the first embodiment of the present invention.

FIG. 3A illustrates the stack of the server 40 configuring the physical host 30.

On the server 40, the virtualization program 60 is executed by the CPU 41. This virtualization program 60 generates one or more VMs 50 and operates the generated VMs 50. An operating system and applications are executed on the VMs 50.

In this embodiment, the server 40 that executes the virtualization program 60 corresponds to the physical host 30.

FIG. 3B illustrates the stack of the server 40 configuring the logical hosts 31.

On the server 40, the logical partitioning program 70 is executed by the CPU 41. This logical partitioning program 70 generates one or more LPARs 51 and manages the generated LPARs 51.

Further, the CPU 41 allocated to the LPAR 51 executes the virtualization program 60. This virtualization program 60 generates one or more VMs 50 on the LPAR 51 and operates the generated VMs 50. An operating system and applications are executed on the VM 50.

In this embodiment, the LPAR 51 that executes the virtualization program 60 corresponds to the logical host 31.

FIG. 4 is a diagram illustrating a configuration example of the resource management program 20 in the first embodiment according to the present invention.

The resource management program 20 includes a unified resource management module 21, a cluster management module 22 and a server management module 23.

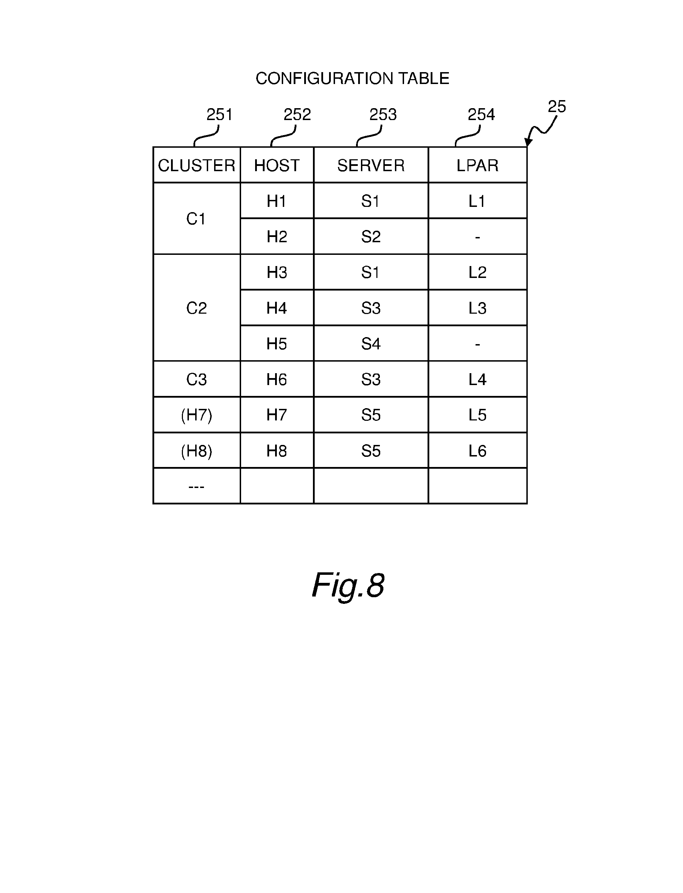

The unified resource management module 21 manages the resource pool 90. The unified resource management module 21 includes a configuration table 25. The configuration table 25 stores configuration information of the resource pool 90. The configuration table 25 is described in detail later using FIG. 8.

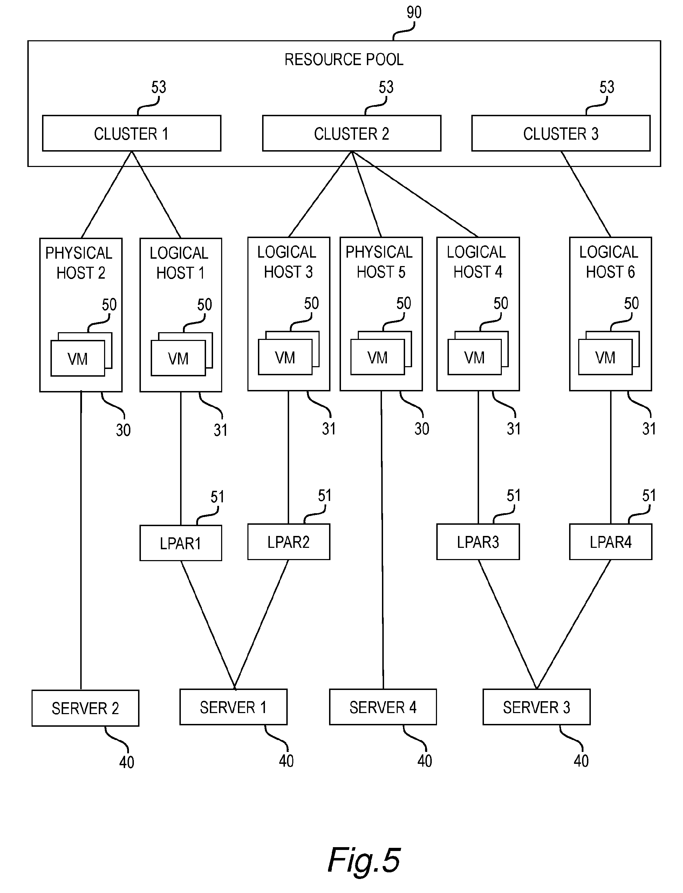

The cluster management module 22 manages clusters (see FIG. 5). Specifically, the cluster management module 22 manages the configurations and states of the VMs 50 and the configurations of the clusters (see FIG. 5).

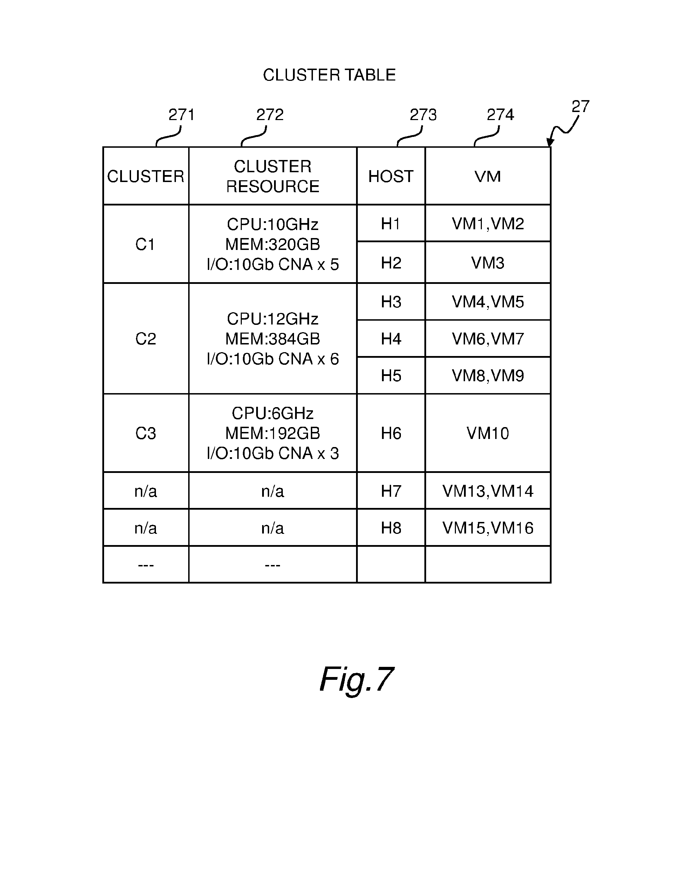

The cluster management module 22 includes a cluster table 27. The cluster table 27 stores configuration information of the VMs 50 obtained from the virtualization program 60 and that of the clusters (see FIG. 5). The cluster table 27 is described in detail later using FIG. 7.

The server management module 23 manages the servers 40. Specifically, the server management module 23 manages the configurations and states of the servers 40 and those of the LPARs 51.

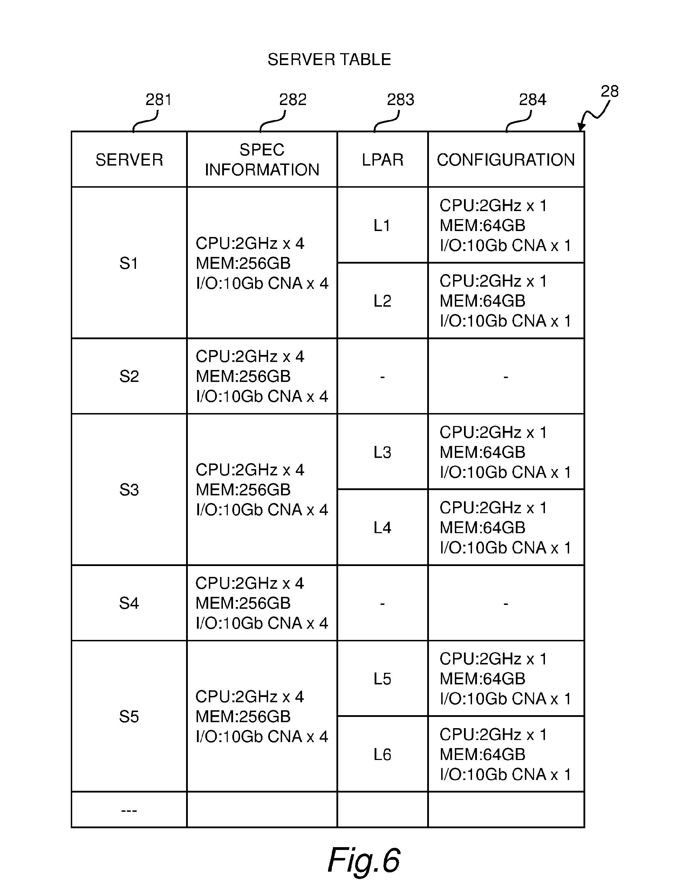

The server management module 23 includes a server table 28. The server table 28 stores configuration information of the servers 40 and that of the LPARs 51 obtained from the logical partitioning program 70. The server table 28 is described in detail later using FIG. 6.

Note that the unified resource management module 21, the cluster management module 22 and the server management module 23 may be mounted by the hardware or firmware equipped in the servers 40 or a combination of these. Further, different computers may include the unified resource management module 21, the cluster management module 22 and the server management module 23.

FIG. 5 is a diagram illustrating a configuration example of the resource pool 90 according to the first embodiment of the present invention.

A server 2 and a server 4 illustrated in FIG. 5 are the servers 40 corresponding to the physical hosts 30. Further, a server 1 and a server 3 are the servers 40 on which the LPARs 51 configuring the logical hosts 31 are generated. Each LPAR 51 corresponds to the logical host 31.

The physical host 30 operates as a computer to which all the physical resources of the server 40 are allocated.

The physical resources obtained by logically partitioning the physical resources of the server 40 are allocated to the LPAR 51. Further, the logical host 31 operates as a computer to which the physical resources of the LPAR 51 are allocated.

The VM 50 is a virtual machine to which the physical resources of the physical host 30 or the logical host 31 are allocated. The operating system and the applications are executed on the VM 50.

The resource pool 90 is composed of clusters 53. In this embodiment, the cluster 53 is treated as one physical resource and this physical resource is allocated to each VM 50.

The clusters 53 include a resource group composed of one or more physical hosts 30 and one or more logical hosts 31, a resource group composed of a plurality of logical hosts 31 and a resource group composed of a plurality of physical hosts 30.

The physical hosts 30 and the logical hosts 31 configuring the cluster 53 are also referred to as the physical hosts 30 and the logical hosts 31 belonging to the cluster below.

Note that the physical hosts 30 and the logical hosts 31 need not necessarily belong to the cluster 53. Further, hosts (physical hosts 30 and logical hosts 31) belonging to none of the clusters 53 may be managed as one cluster 53.

In the example illustrated in FIG. 5, a physical host 2 corresponds to the server 2 and a physical host 5 corresponds to the server 4. A logical host 1 corresponds to an LPAR 1 generated on the server 1, and a logical host 3 corresponds to an LPAR 2 generated on the server 1. Further, a logical host 4 corresponds to an LPAR 3 generated on the server 3.

This embodiment is **characterized in that** the resource pool 90 is composed of the clusters 53 each including at least one or more logical hosts 31. This enables the amount of physical resources of the cluster 53 to be changed by changing the allocation of the physical resources to the LPAR 51 corresponding to the logical host 31.

FIG. 6 is a table illustrating an example of the server table 28 according to the first embodiment of the present invention.

The server table 28 is generated by the server management module 23. The server table 28 includes a server column 281, a spec information column 282, an LPAR column 283 and a configuration column 284.

The server column 281 stores an identifier for uniquely identifying each server 40 in the computer system. For example, UUIDs, MAC addresses, information indicating the physical positions of blade servers or racks (slot position numbers) and names set by the administrator and the like are thought as the identifiers of the servers 40.

The spec information column 282 stores spec information indicating the resource amounts of the physical resources of the server 40. In this embodiment, the resource amounts of the CPU, the memory and the I/O device are stored as the spec information. Note that the spec information may include the resource amounts of other physical resources.

The LPAR column 283 stores an identifier for uniquely identifying each LPAR 51 in the computer system. Note that information indicating that the LPAR 51 has not been generated is stored in the LPAR column 283 in a case where no LPAR 51 is generated. For example, in the case of the physical host 30, the aforementioned information is stored in the LPAR column 283.

The configuration column 284 stores the spec information indicating the resource amounts of the physical resources logically allocated to the LPAR 51. Note that in a case where no LPAR 51 is generated, no spec information is stored in the configuration column 284.

FIG. 7 is a table illustrating an example of the cluster table 27 according to the first embodiment of the present invention.

The cluster table 27 is generated by the cluster management module 22. The cluster table 27 includes a cluster column 271, a cluster resource column 272, a host column 273 and a VM column 274.

The cluster column 271 stores an identifier for uniquely identifying each cluster 53 in the resource pool 90.

The cluster resource column 272 stores the resource amounts of physical resources in the cluster 53. Specification, the total values of the resource amounts of the physical resources of all the hosts configuring the cluster 53 are stored.

The host column 273 stores an identifier of each host belonging to the cluster 53. Host names, IP addresses and the like are, for example, thought as the identifiers of the hosts.

The VM column 274 stores identifier for identifying each VM 50 operating on the host.

Note that the cluster table 27 also includes entries of the hosts not belonging to the clusters 53. In this case, information indicating that the host does not belong to the clusters 53 is stored in the cluster column 271 and the cluster resource column 272 of these entries. In the example illustrated in FIG. 7, "n/a" is stored.

FIG. 8 is a diagram illustrating an example of the configuration table 25 according to the first embodiment of the present invention.

The configuration table 25 is generated by the unified resource management module 21. The configuration table 25 includes a cluster column 251, a host column 252, a server column 253 and an LPAR column 254.

The cluster column 251 stores an identifier for uniquely identifying each cluster 53 in the resource pool 90. Note that the cluster column 251 is the same as the cluster column 271.

The host column 252 stores an identifier of each host belonging to the cluster 53. The host column 252 is the same as the host column 273.

The unified resource management module 21 obtains information stored in the cluster column 271 and the host column 273 of the cluster table 27 of the cluster management module 22, and stores each obtained piece of information in the cluster column 251 and the host column 252.

The server column 253 stores an identifier for uniquely identifying each server 40 in the computer system. Note that the server column 253 is the same as the server column 281.

The LPAR column 254 stores an identifier for uniquely identifying each LPAR 51 in the computer system. Note that the LPAR column 254 is the same as the LPAR column 283.

The unified resource management module 21 obtains information stored in the server column 281 and the LPAR column 283 of the server table 28 of the server management module 23 and stores each obtained piece of information in the server column 253 and the LPAR column 254.

Note that the unified resource management module 21 can distribute and set the virtualization program 60 to the servers 40 and LPARs 51, thereby being able to create the physical hosts 30 and the logical hosts 31.

The unified resource management module 21 manages the identifiers of the servers 40 to which the virtualization program 60 is distributed and the identifiers of the hosts such as the host names or the IP addresses set for each host while relating them. In this way, a relationship between the hosts and the servers 40 in the configuration table 25 can be grasped.

Note that, in this embodiment, the unified resource management module 21 manages the hosts not belonging to the clusters 53 as one cluster 53. In this case, the identifier of the host is stored in the cluster column 251 of an entry corresponding to the host not belonging to the clusters 53.

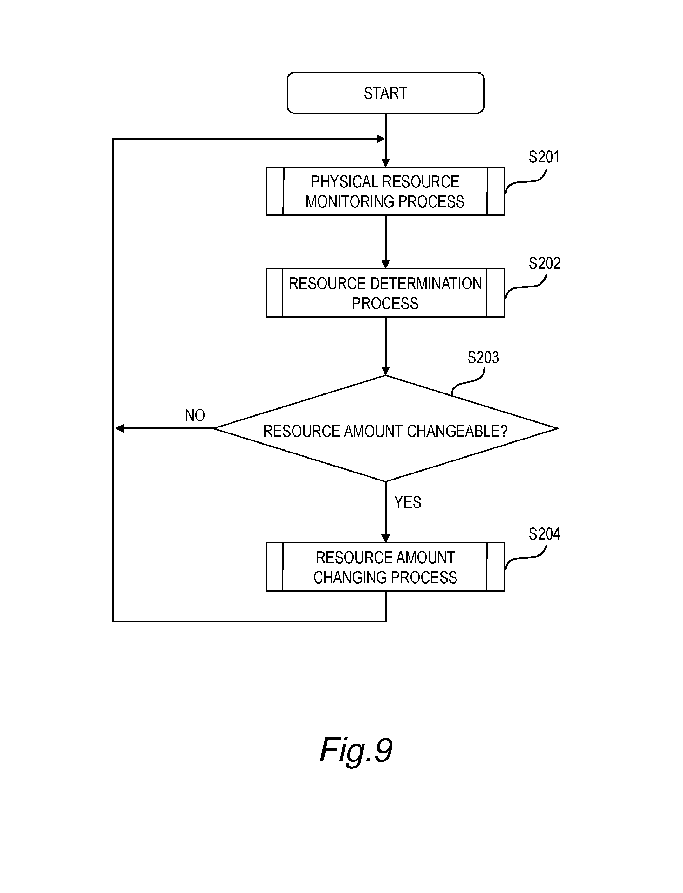

FIG. 9 is a flow chart illustrating a resource management process performed by the resource management program 20 according to the first embodiment of the present invention.

Note that it is assumed in the following description that one or more clusters 53 each composed of one or more physical hosts 30 and one or more logical hosts 31 are already created in the resource pool 90. Further, the server management module 23, the cluster management module 22 and the unified resource management module 21 are assumed to hold the server table 28, the cluster table 27 and the configuration table 25.

First, the resource management program 20 performs a physical resource monitoring process (Step S201). The resource management program 20 may periodically perform the physical resource monitoring process or may perform the physical resource monitoring process in accordance with an instruction from the administrator.

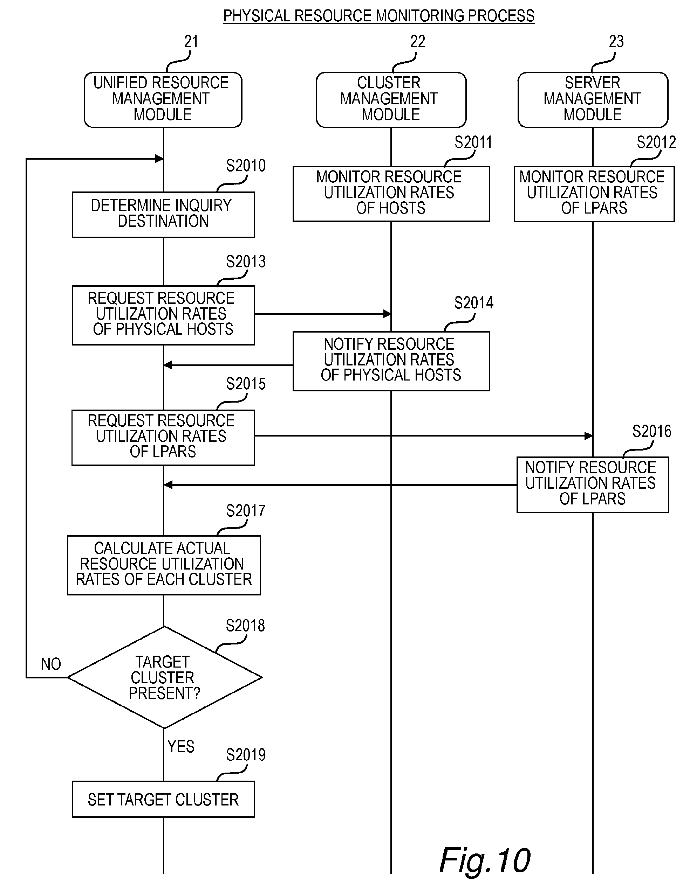

Specifically, the resource management program 20 obtains information including utilization rates of the physical resources in each cluster 53 by performing the physical resource monitoring process. Note that the physical resource monitoring process is described in detail later using FIG. 10.

The resource management program 20 performs a resource determination process based on the information obtained from each cluster 53 (Step S202).

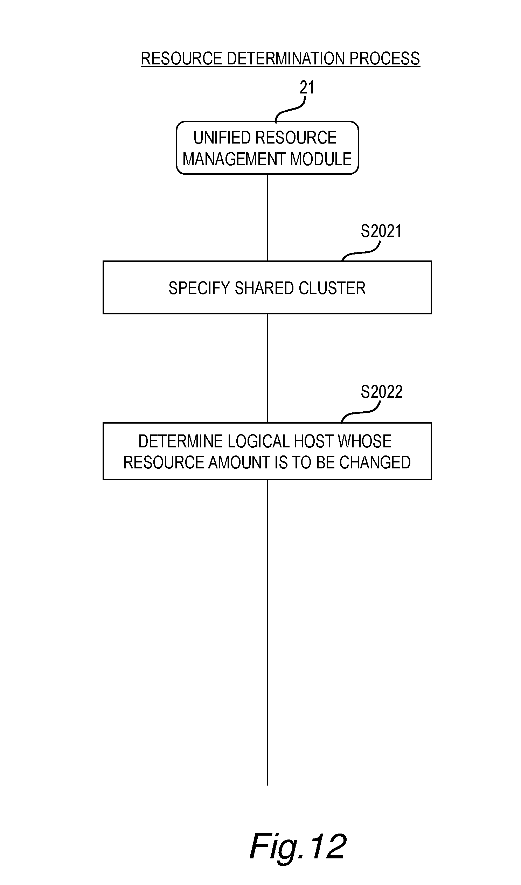

The resource management program 20 determines the cluster 53 whose allocated amount of physical resources is to be changed by performing the resource determination process. Note that the resource determination process is described in detail later using FIG. 12.

The resource management program 20 determines whether or not the allocated amount of the physical resources can be changed for the determined cluster 53 (Step S203).

In a case where the allocated amount of the physical resources cannot be changed, the resource management program 20 returns to Step S201 to perform similar processes (Steps S201 to S204). At this time, the resource management program 20 notifies a message to the effect that the allocated amount of the physical resources cannot be changed to the administrator and the other programs.

In a case where the allocated amount of the physical resources can be changed, the resource management program 20 performs a resource amount changing process (Step S204). Thereafter, the resource management program 20 returns to Step S201 to perform similar processes (Step S201 to S204).

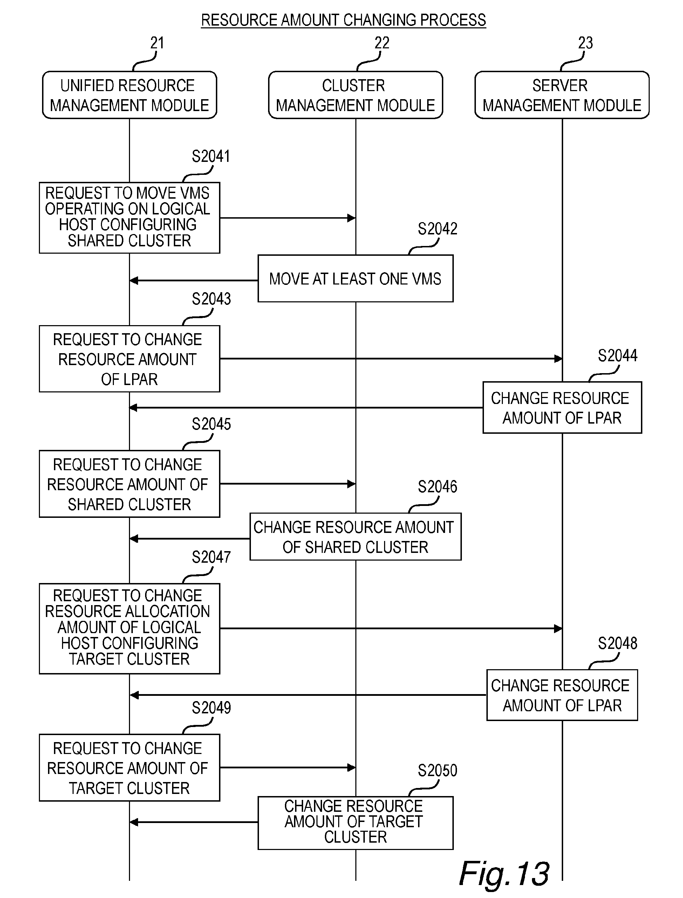

Note that the resource amount changing process is described in detail later using FIG. 13.

The allocated amount of the physical resources is also referred to as a resource amount below.

FIG. 10 is a sequence diagram illustrating the physical resource monitoring process according to the first embodiment of the present invention.

The cluster management module 22 and the server management module 23 respectively monitor resource utilization rates.

Specifically, the cluster management module 22 monitors the resource utilization rates of each host used by the VMs 50 (Step S2011). The cluster management module 22 holds the monitoring result as data of a specified format.

Here, the resource utilization rates of the host are values indicating the utilization rates of the CPU, the memory and the I/O device allocated to the host and expressed as values from 0 to 100 %.

A used bandwidth for maximum performance and the like are thought as the resource utilization rate of the I/O device. Note that the maximum performance is the total value of performance values in the I/O device to which the host is allocated and, for example, 40 Gb in a case where four CNAs of 10 Gb are allocated to the host.

On the other hand, the server management module 23 monitors the resource utilization rates of each LPAR 51 (Step S2012). The server management module 23 holds the monitoring result as data of a specified format.

Here, the resource utilization rates of the LPAR 51 are values indicating the utilization rates of the CPU, the memory and the I/O device allocated to the LPAR 51 and expressed as values from 0 to 100 %.

Note that the cluster management module 22 and the server management module 23 respectively periodically perform the monitoring processes as described above. Note that execution timings of the monitoring process in Step S2011 and that in Step S2012 described above are not limited to timings illustrated in this sequence.

The unified resource management module 21 determines an inquiry destination for the resource utilization rates by referring to the configuration table 25 (Step S2010).

In a case where no identifier is stored in the LPAR column 254, the corresponding host is the physical host 30. Thus, the unified resource management module 21 determines the cluster management module 22 as the inquiry destination. In a case where the identifier is stored in the LPAR column 254, the corresponding host is the logical host 31. Thus, the unified resource management module 21 determines the server management module 23 as the inquiry destination.

In a case where the inquiry destination is the cluster management module 22, the unified resource management module 21 outputs a request to obtain the resource utilization rates of the physical host 30 to the cluster management module 22 (Step S2013). Note that this obtainment request includes the identifier of the cluster 53 and that of the physical host 30.

In a case of receiving the obtainment request, the cluster management module 22 notifies the requested resource utilization rates of the physical host 30 to the unified resource management module 21 (Step S2014).

Specifically, the cluster management module 22 specifies a target physical host 30 based on the identifiers of the cluster 53 and the physical host 30. Further, the cluster management module 22 refers to the monitoring result, reads the resource utilization rates of the specified physical host 30 and notifies the read resource utilization rates of the physical host 30 to the unified resource management module 21.

Note that Steps S2013 to S2016 are performed for each cluster 53.

In a case where the inquiry destination is the server management module 23, the unified resource management module 21 outputs a request to obtain the resource utilization rates of the LPAR 51 to the server management module 23 (Step S2015). Note that this obtainment request includes the identifier of the cluster 53 and that of the LPAR 51.

In a case of receiving the obtainment request, the server management module 23 notifies the requested resource utilization rates of the LPAR 51 to the unified resource management module 21 (Step S2016).

Specifically, the server management module 23 specifies a target LPAR 51, for which notification is to be made, based on the identifiers of the cluster 53 and the LPAR 51 included in the obtainment request. Further, the server management module 23 refers to the monitoring result, reads the resource utilization rates of the specified LPAR 51 and notifies the read resource utilization rates of the LPAR 51 to the unified resource management module 21.

The unified resource management module 21 calculates actual resource utilization rates of each cluster 53 based on the obtained resource utilization rates (Step S2017).

Here, the actual resource utilization rates of the cluster 53 indicate utilization rates of the physical resources in the cluster 53. The physical resources include at least the CPU, the memory and the I/O device. Accordingly, the actual resource utilization rates of the CPU, the memory and the I/O device are calculated.

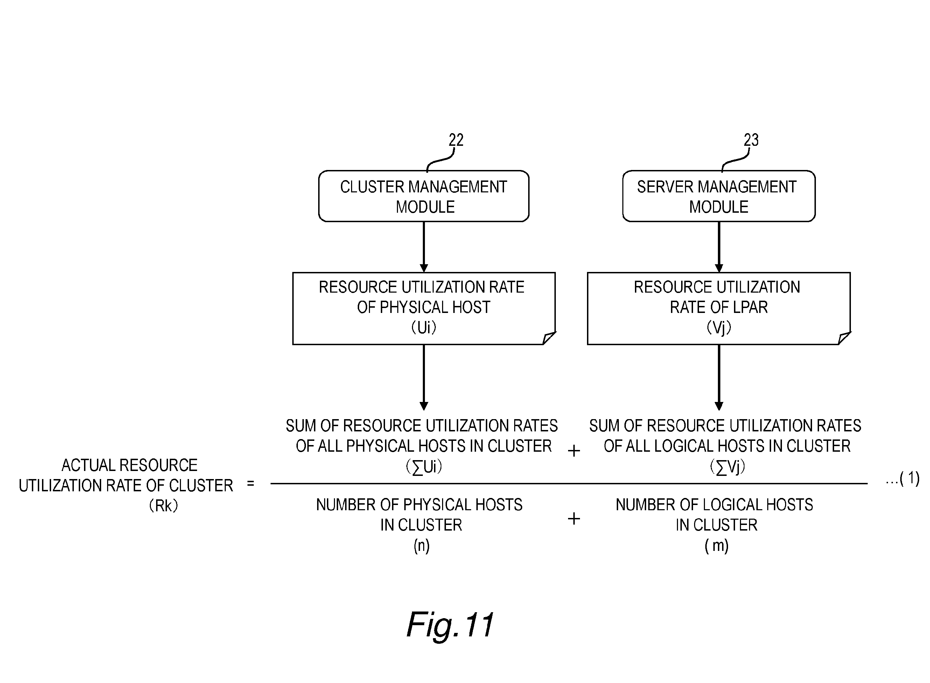

Note that a method for calculating the actual resource utilization rates of each cluster 53 is described later using FIG. 11.

The unified resource management module 21 determines whether or not there is any cluster 53 whose resource amount is to be changed based on the calculated actual resource utilization rates of each cluster 53 (Step S2018). The cluster 53 whose resource amount is to be changed is also referred to as a target cluster 53.

This determination process is, for example, thought to be performed by the following methods.

A possible first method is to determine whether or not there is any cluster 53, the actual resource utilization rate of the CPU of which is equal to or more than a predetermined threshold value (e.g. 70 %).

Note that, in the first method, the resource utilization rates of the memory and the I/O device may be used without being limited to the resource utilization rate of the CPU. That is, the cluster 53, the resource utilization rate of at least any one of the physical resources of which is equal to or more than the threshold value, is determined as the target cluster 53.

Note that the cluster, the physical resources of two or more of the CPU, the memory and the I/O device of which are equal to or more than the threshold value, may be determined as the target cluster 53. Further, a determination method may use an average value of the actual resource utilization rates of the CPU, the memory and the I/O device.

The first method is a determination method aimed at distributing loads of the cluster 53.

A possible second method is to determine whether or not a difference in the actual resource utilization rate between the cluster 53 with the maximum actual resource utilization rate of the CPU and the cluster 53 with the minimum actual resource utilization rate of the CPU is equal to or more than a predetermined threshold value. In a case where the difference in the actual resource utilization rates of the CPU is equal to or more than the predetermined threshold value, the cluster 53 with the maximum resource utilization rate of the CPU is determined as the target cluster 53.

Note that, in the second method, the actual resource utilization rates of the memory and the I/O device may be used without being limited to the actual resource utilization rate of the CPU. That is, if a difference in the actual resource utilization rates of at least any one of the physical resources is equal to or more than a predetermined threshold value, the cluster 53 with the maximum actual resource utilization rate of the physical resource is determined as the target cluster 53. Further, a determination method may use an average value of the actual resource utilization rates of the CPU, the memory and the I/O device.

The second method is a determination method aimed at equalizing loads among the clusters 53 in the computer system.

Note that the above determination methods are examples and the target cluster may be determined using another method.

Note that each threshold value used in the first and second methods are had by the unified resource management module 21. The threshold values may be input by the administrator using an UI provided by the unified resource management module 21 or may be had in advance by the unified resource management module 21.

In a case where the absence of the target cluster 53 is determined in Step S2018, the unified resource management module 21 returns to Step S2010 and performs a similar process.

In a case where the presence of the target cluster 53 is determined in Step S2018, the unified resource management module 21 sets the target cluster 53 and ends the process (Step S2019).

FIG. 11 is a diagram illustrating the method for calculating the actual resource utilization rate of the cluster 53 according to the first embodiment of the present invention.

In a case where Ui (i is an integer between 1 to n) denotes the resource utilization rate of the physical host 30 obtained in Step S2013, and Vj (j is an integer between 1 and m) denotes the resource utilization rate of the LPAR 51 obtained in Step S2015, an actual resource utilization rate Rk of the cluster 53 is calculated using Equation (1) illustrated in FIG. 11.

Here, n denotes the number of the physical hosts 30 including the cluster 53 and m denotes the number of the logical hosts 31 including the cluster 53.

Further, k denotes the type of the physical resource in the cluster 53. In this embodiment, the actual resource utilization rate of the CPU is expressed when k = "1", that of the memory is expressed when k = "2" and that of the I/O device is expressed when k = "3".

Here, the actual resource utilization rate of the CPU of the cluster 53 whose identifier is "C1" is described as an example.

The unified resource management module 21 inquires of the server management module 23 (Step S2015) since the host "H1" in the host column 252 is the logical host 31 in Step S2010. Further, the unified resource management module 21 inquires of the cluster management module 22 (Step S2013) since the host "H2" in the host column 252 is the physical host 30 in Step S2010.

When U1 denotes the resource utilization rate of the CPU of the physical host 30 and V1 denotes the resource utilization rate of the CPU of the LPAR 51, the actual resource utilization rate of the CPU of the cluster 53 is calculated as in the following Equation (2) since n = 1, m = 1.

$$R1 = (U1+V1)/2 \cdots \text{Equation (2)}$$

The resource utilization rates of the logical host 31 may not be accurately measured because a monitoring unit of the LPAR 51 is affected by the logical partitioning program 70. However, by using the above calculation equation, the actual resource utilization rates of the physical resources in the cluster 53 can be obtained.

FIG. 12 is a flow chart illustrating the resource determination process according to the first embodiment of the present invention.

The unified resource management module 21 specifies a shared cluster 53 sharing the physical resources of the same server 40 as the target cluster 53 (Step S2021). Specifically, the following process is performed.

The unified resource management module 21 specifies the LPAR 51 corresponding to the logical host 31 configuring the target cluster 53 by referring to the configuration table 25. Specifically, the entries in which the identifier is stored in the LPAR column 254 are searched.

Subsequently, the unified resource management module 21 outputs a search request including the identifier of the specified LPAR 51 to the server management module 23.

The server management module 23 having received this search request specifies the server 40 on which the logical host 31 configuring the target cluster 53 is generated by referring to the server table 28. Further, the server management module 23 searches another LPAR 51 generated on the specified server 40.

The server management module 23 notifies the identification information (in the LPAR column 283) of the searched other LPAR 51 to the unified resource management module 21.

The unified resource management module 21 specifies the shared cluster 53 configured by the logical host 31 corresponding to the notified LPAR 51 by referring to the configuration table 25 based on the notified identifier of the LPAR 51. Note that a plurality of shared clusters 53 may exist.

In the example illustrated in FIG. 8, the logical host H3 shares the physical resources of the same server S1 as the logical host H1 of the cluster C1. Accordingly, the cluster C2 configured by the logical host H3 is the shared cluster of the cluster C1.

In a case where there is no shared cluster 53, it is determined that the resource amount cannot be changed. Thus, the determination result is "No" in the determination in Step S203.

Note that a method for changing the resource amount of the cluster 53 in the absence of the shared cluster 53 is described in a third embodiment.

The unified resource management module 21 determines the logical host 31 whose resource amount is to be changed (Step S2022).

Specifically, the unified resource management module 21 determines a combination of the logical host 31 configuring the target cluster 53 and the logical host 31 configuring the shared cluster 53.

In the example illustrated in FIG. 8, a combination of the logical host H1 configuring the target cluster C1 and the logical host H3 configuring the shared cluster C2 is determined.

Determination is made as follows, in a case where there are pluralities of combinations.

First, the unified resource management module 21 calculates a predicted value (also referred to as a first predicted value) of the actual resource utilization rate of the shared cluster 53. Here, the predicted value of the actual resource utilization rate of the shared cluster 53 indicates a resource utilization rate in a case of the physical resource of the logical host 31 configuring the shared cluster 53 is reduced by a resource change amount.

Further, the unified resource management module 21 calculates a predicted value (also referred to as a second predicted value) of the actual resource utilization rate of the target cluster 53. Here, the predicted value of the actual resource utilization rate of the target cluster 53 indicates a resource utilization rate when the physical resource of the logical host 31 configuring the target cluster 53 is added by the resource change amount.

The unified resource management module 21 determines a combination with a minimum difference between the first predicted value and the second predicted value.

Here, a predicted value E of the actual resource utilization rate of the cluster 53 can be calculated using the following Equation (3).

$$\mathrm{Ek} = \mathrm{Rk} * \mathrm{A}/(\mathrm{D}+\mathrm{A}) \cdots \mathrm{Equation~(3)}$$

Here, R denotes the actual resource utilization rate of the cluster 53, A denotes a value stored in the cluster resource column 272, and D denotes the resource change amount. Note that, in the case of calculating the actual resource utilization rate of the shared cluster 53, a minus sign is added before the resource change amount D in the Equation.

The predicted value E of the actual resource utilization rate of the cluster 53 is calculated under the following two conditions.

(Condition 1) D does not exceed the physical resource amount of the server 40 configuring the logical host 31

(Condition 2) E is smaller than the threshold value in Step S2018 of FIG. 10

In the absence of a combination of the logical hosts 31 satisfying the above conditions, it is determined that the resource amount cannot be changed. Thus, the result is "No" in the determination process in Step S203.

Note that, in this embodiment, the predicted value E is calculated for the physical resource whose actual resource utilization rate is equal to or more than the threshold value in the determination process in Step S2018 of FIG. 10.

However, the predicted value E may be calculated for a plurality of or all physical resources and combination (s) of the logical hosts 31 satisfying the (Condition 1) and (Condition 2) and the resource change amount D may be determined.

Note that the above determination conditions are examples and can be appropriately changed by the administrator. For example, the unified resource management module 21 may present a list of the actual resource utilization rates of the target cluster 53 and the shared cluster 53, differences between the actual resource utilization rates of each cluster 53, combinations of the logical hosts 31 and resource change amounts D to the administrator using the UI and may provide an interface used to determine a combination of the logical hosts and the resource change amount D.

Further, the combination of the logical hosts 31 and the resource change amount D may be determined based on another condition instead of the minimum difference between the predicted values of the actual resource utilization rates.

Note that the combination of the logical hosts 31 is automatically determined in Step S2022 if each of the target cluster 53 and the shared cluster 53 includes only one logical host 31.

FIG. 13 is a sequence diagram illustrating a resource changing process according to the first embodiment of the present invention.

In the resource changing process, the resource amount is changed between the logical host 31 of the target cluster 53 and the logical host 31 of the shared cluster 53 determined in Step S2022 of FIG. 12.

The logical host 31 of the target cluster 53 is referred to as an addition logical host 31 and the logical host 31 of the shared cluster 53 is referred to as a reduction logical host 31.

The unified resource management module 21 requests the cluster management module 22 to move at least one VMs 50 operating on the reduction logical host 31 (Step S2041).

In a case of receiving the request to move at least one VMs 50, the cluster management module 22 performs a processing of moving at least one VMs 50 (Step S2042).

Specifically, the cluster management module 22 moves at least one VMs 50 operating on the reduction logical host 31 to another host (physical host 30 and logical host 31) in the shared cluster. Note that a method for moving the VM 50 is thought to be a method for moving the VM 50 to another host without stopping the OS and software operating on the VM 50 or a method for moving the VM 50 to another host after temporarily stopping the VM 50.

By moving at least one VMs 50 before the resource amount allocation of the LPAR 51 realizing the reduction logical host 31 is changed, the influence on at least one VMs 50 can be prevented.

Note that the cluster management module 22 may not perform the process of moving at least one VMs 50 if there is no VM 50 to be influenced.

It is assumed in this embodiment that there is no VM 50 to be influenced, in a case where the total value of the resource utilization rates of all the VMs 50 operating on the reduction logical host 31 is smaller than a value calculated by subtracting the resource change amount D from the physical resource allocated to the LPAR 51 corresponding to this logical host 31.

The unified resource management module 21 requests the server management module 23 to change the resource amount of the LPAR 51 corresponding to the reduction logical host 31 (Step S2043).

In a case of receiving the request to change the resource amount, the server management module 23 changes the resource amount of the LPAR 51 corresponding to the reduction logical host 31 (Step S2044).

Specifically, the resource amount of this LPAR 51 is changed to the new one calculated by subtracting the resource change amount D. At this time, the server management module 23 updates the information in the configuration column 284 of an entry corresponding to this LPAR 51 by referring to the server table 28.

The unified resource management module 21 requests the cluster management module 22 to change the resource amount of the shared cluster 53 (Step S2045). This change request includes the value of the resource change amount D.

In a case of receiving the request to change the resource amount, the cluster management module 22 changes the resource amount of the shared cluster 53 (Step S2046).

Specifically, the resource amount of the shared cluster 53 is changed to a value calculated by subtracting the resource change amount D. At this time, the cluster management module 22 updates the information in the cluster resource column 272 of an entry corresponding to the shared cluster 53 by referring to the cluster table 27. That is, a change of the resource amount in the LPAR 51 is reflected.

In a case where the cluster management module 22 automatically performs the processing of Step S2046 after performing the processing of Step S2044, the processing of Step S2045 can be omitted. That is, the processing of Step S2045 can be omitted, in a case where the server management module 23 includes an API (Application Program Interface) used to notify a change in the resource amount of the LPAR 51 to the cluster management module 22.

Steps S2041 to S2046 are processings performed to reduce the resource amount of the shared cluster 53.

Subsequently, the unified resource management module 21 requests the server management module 23 to change the resource amount of the LPAR 51 corresponding to the addition logical host 31 (Step S2047). This change request includes the value of the resource change amount D.

In a case of receiving the request to change the resource amount, the server management module 23 changes the resource amount of the LPAR 51 corresponding to the addition logical host 31 (Step S2048).

Specifically, the resource amount of this LPAR 51 is added by the resource change amount D. At this time, the server management module 23 updates the information in the configuration column 284 of an entry corresponding to this LPAR 51 by referring to the server table 28.

The unified resource management module 21 requests the cluster management module 22 to change the resource amount of the target cluster (Step 52049). This change request includes the value of the resource change amount D.

In a case of receiving the request to change the resource amount, the cluster management module 22 changes the resource amount of the target cluster 53 (Step S2050).

Specifically, the resource amount of the target cluster 53 is changed to a value calculated by adding the resource change amount D. At this time, the cluster management module 22 updates the information in the cluster resource column 272 of an entry corresponding to the target cluster 53 by referring to the cluster table 27. That is, a change of the resource amount in the LPAR 51 is reflected.

In a case where the cluster management module 22 automatically performs the processing of Step S2048 after performing the processing of Step S2046, the processing of Step S2047 can be omitted. That is, the processing of Step S2047 can be omitted, in a case where the server management module 23 includes the API used to notify a change in the resource amount of the LPAR 51 to the cluster management module 22.

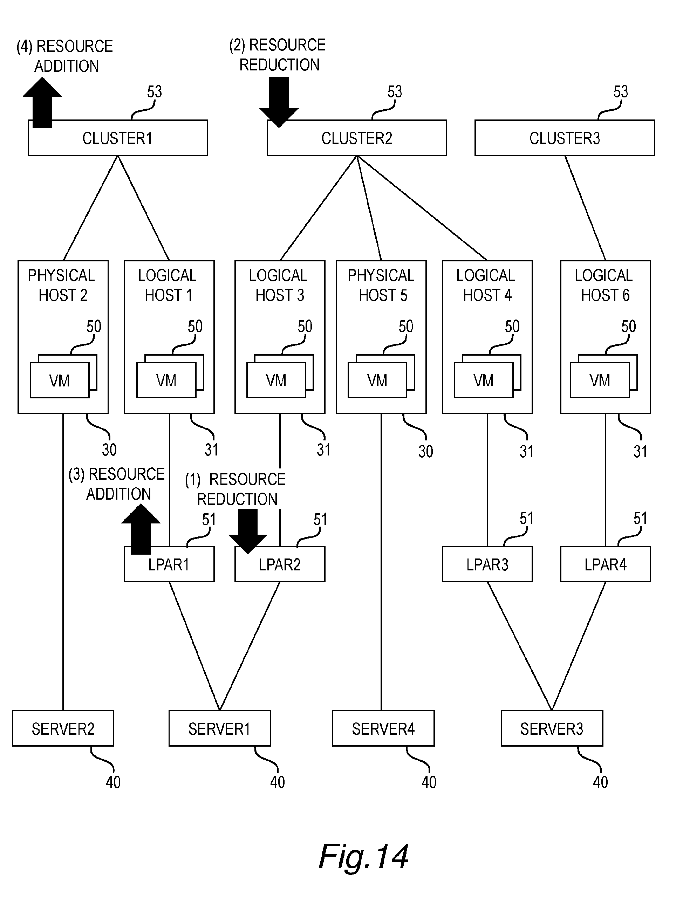

FIG. 14 is a diagram illustrating outline of the resource changing process according to the first embodiment of the present invention.

In FIG. 14, the resource changing process is outlined, in a case where a cluster 1 is the target cluster 53 and a cluster 2 is the shared cluster 53.

At this time, a server 1 is shared by the target cluster 1 and the shared cluster 2. Accordingly, in Step S2022, a logical host 1 and a logical host 2 are determined as a combination of the logical hosts 31 whose resource amounts are to be changed.

Further, in Step S2044, the resource amount of an LPAR 2 is reduced by the resource change amount D. In Step S2046, a reduction of the resource amount in the LPAR 2 is reflected on the cluster 2.

In Step S2048, the resource amount of the LPAR 1 is added by the resource change amount D. In Step S2050, an addition of the resource amount in the LPAR 1 is reflected on the cluster 1.

[Modification 1 of the First Embodiment]

In the resource determination process, the logical host 31 not belonging to the clusters 53 may be selected as the shared cluster 53 whose resource amount is to be changed. In this case, the resource determination process is performed as follows.

In Step S2021, the logical host 31 is selected as the shared cluster 53, that corresponds to the LPAR 51 generated on the same server 40 as the LPAR 51 corresponding to the logical host 31 belonging to the target cluster 53 and does not belong to the clusters 53.

In Step S2022, the actual resource utilization rate of the logical host 31 not belonging to the clusters 53 is calculated and the reduction logical host 31 is determined based on the calculated actual resource utilization rate of the logical host 31. Note that, in the case of calculating the actual resource utilization rate of the cluster 53, the spec information of the LPAR 51 corresponding to this logical host 31, i.e. the value stored in the configuration column 284 is used as A.

Note that the resource changing process is the same as in the first embodiment.

[Modification 2 of the First Embodiment]

In the case of adding the resource amount of the target cluster 53, the unused resource of the server 40 on which the LPAR 51 corresponding to the logical host 31 belonging to the target cluster 53 is generated may be added to this LPAR 51.

In this modification, the resource management program 20 has information used to manage the unused resource amount of each server 40.

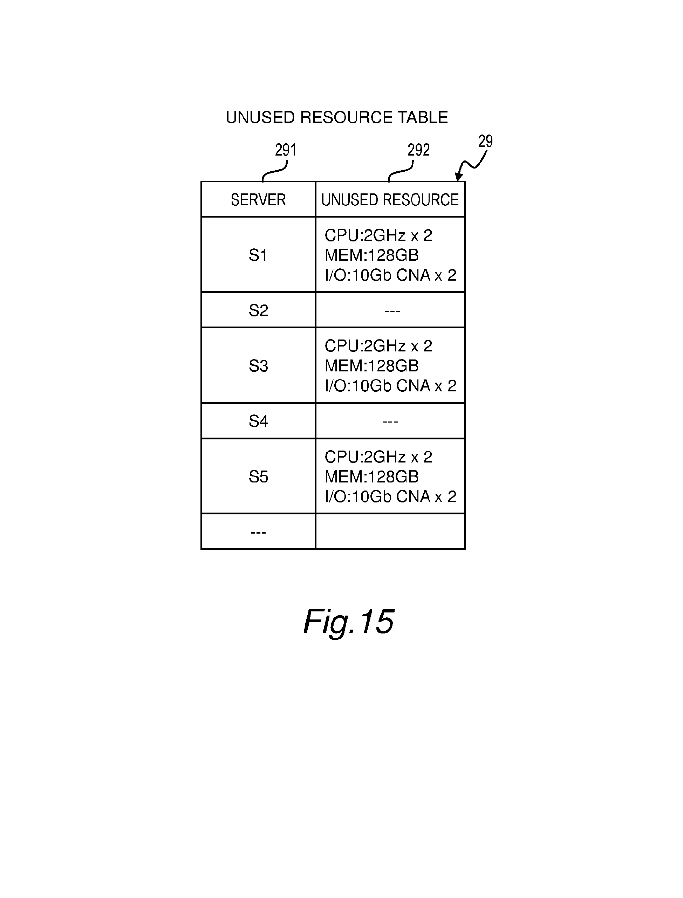

FIG. 15 is a diagram illustrating an example of an unused resource table 29 according to a modification of the first embodiment of the present invention.

The unused resource table 29 includes a server column 291 and an unused resource column 292. The server column 291 stores the identifier of each server 40 and is the same as the server column 281. The unused resource column 292 stores the unused resource amounts in the server 40.

Note that the space resource amount of the server 40 can be calculated by subtracting the information in the configuration column 284 from the information in the spec information column 282 of the server table 28.

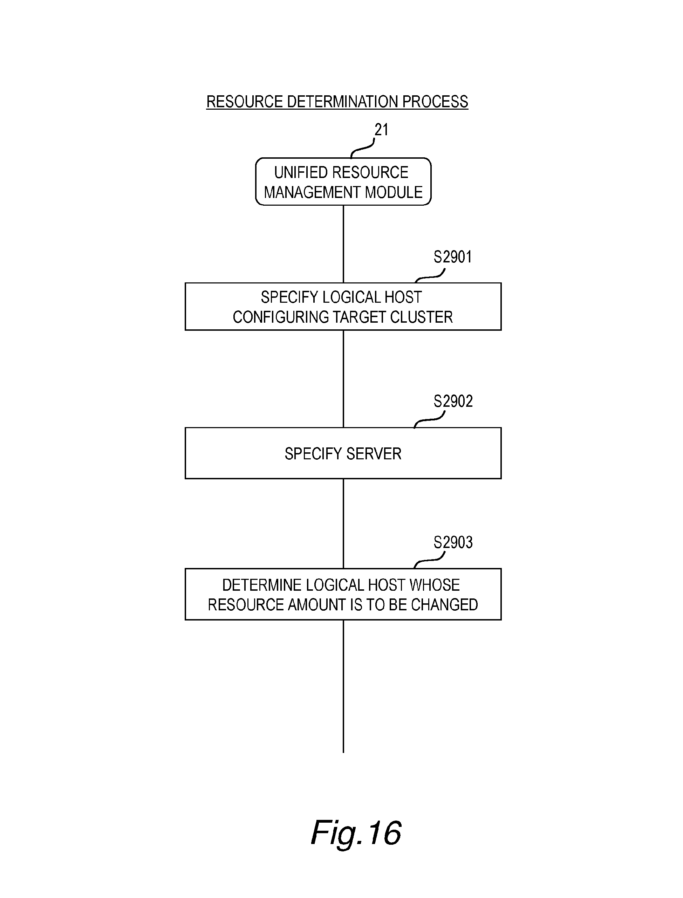

FIG. 16 is a flow chart illustrating a resource determination process according to a modification of the first embodiment of the present invention.

The unified resource management module 21 specifies the logical host 31 configuring the target cluster 53 (Step S2901).

Specifically, the unified resource management module 21 searches the host whose identifier is stored in the LPAR column 254 of an entry corresponding to the target cluster 53 by referring to the configuration table 25.

Subsequently, the unified resource management module 21 specifies the server 40 on which the LPAR 51 corresponding to the specified logical host 31 is generated (Step S2902).

Specifically, the unified resource management module 21 outputs a search request including the identifier of the LPAR 51 corresponding to the specified logical host 31 to the server management module 23.

In a case of receiving this search request, the server management module 23 specifies the server 40 on which the LPAR 51 is generated by referring to the server table 28. The server management module 23 notifies the identifier of the specified server 40 to the unified resource management module 21.

The unified resource management module 21 determines the logical host 31 whose resource amount is to be changed by referring to the unused resource table 29 based on the notified identifier of the server 40 (Step S2903). For example, the following method is thought.

First, the unified resource management module 21 searches the servers 40 having the unused resources equal to or more than the resource change amount D by referring to the unused resource column 292 of entries corresponding to the specified servers 40.

Further, the unified resource management module 21 specifies the server 40 with the largest unused resource amount out of the searched servers 40. In this way, the logical host 31 corresponding to the LPAR 51 generated on the specified server 40 is determined as the logical host 31 whose resource amount is to be changed.

Note that the logical host 31 whose resource amount is to be changed may be determined based on another criterion.

This resource changing process differs in the following points.

Since the shared cluster 53 needs not be considered in the modification, the processings in Steps S2041 to S2046 are not performed.

In Step S2048, the server management module 23 adds the resource amount corresponding to the resource change amount D to the LPAR 51 corresponding to the logical host 31 whose resource amount is to be changed. At this time, the server management module 23 updates the information in the configuration column 284 of an entry corresponding to this LPAR 51 by referring to the server table 28.

In Step S2049, the unified resource management module 21 requests the cluster management module 22 to change the resource amount of the target cluster 53 and updates the corresponding entry of the unused resource table 29.

The modification 1 and the modification 2 can effectively utilize the physical resources and change the resource amount of the cluster without affecting the other clusters.

[Second Embodiment]

A second embodiment differs from the first embodiment in the resource changing process. Specifically, a point of difference is that the unified resource management module 21 stops the addition logical host 31 and the reduction logical host 31 and starts each logical host again after the resource amounts are changed. The following description is centered on differences from the first embodiment.

The configuration of the computer system in the second embodiment is not described since being the same as in the first embodiment. Further, the hardware and software configurations of the management server 10 and the servers 40 are not described since being the same as in the first embodiment. Further, the configurations of the physical hosts 30 and the logical hosts 31 are also not described since being the same as in the first embodiment.

Furthermore, the resource monitoring process and the resource determination process are also not described since being the same as in the first embodiment.

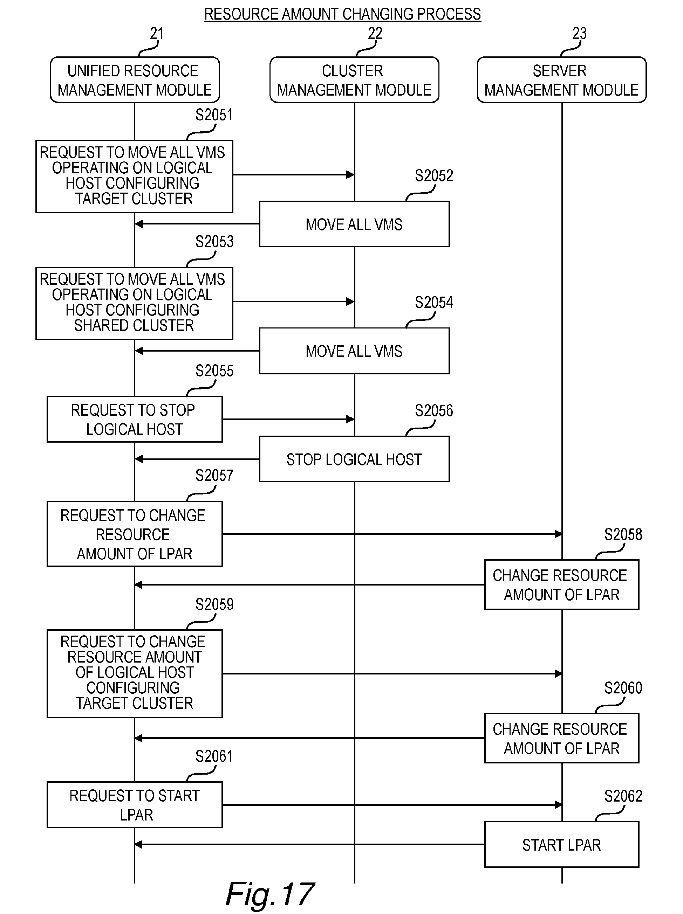

FIG. 17 is a sequence diagram illustrating a resource changing process according to the second embodiment of the present invention.

The unified resource management module 21 requests the cluster management module 22 to move all the VMs 50 operating on the addition logical host 31 (Step S2501).

In a case of receiving the request to move all the VMs 50, the cluster management module 22 performs a processing of moving all the VMs 50 operating on the addition logical host 31 (Step S2502).

Specifically, the cluster management module 22 moves all the VMs 50 operating on the addition logical host 31 to other hosts (physical host 30 and logical host 31) in the target cluster 53.

Note that a method for moving the VMs 50 is thought to be a method for moving the VMs 50 to other hosts without stopping the OS and software operating on the VMs 50 or a method for moving the VMs 50 to other hosts after temporarily stopping the VMs 50.

This is a processing for preventing the influence on the VMs 50 caused by the stop of the addition logical host 31. Note that the processing of Step S2052 can be omitted, in a case where no VM 50 is operating on the addition logical host 31.

The unified resource management module 21 requests the cluster management module 22 to move all the VMs 50 operating on the reduction logical host 31 (Step S2503).

In a case of receiving the request to move the VMs 50, the cluster management module 22 performs a processing of moving all the VMs 50 operating on the reduction logical host 31 (S2504). This processing is the same as that of Step S2042.

This is a processing for preventing the influence on the VMs 50 caused by the stop of the reduction logical host 31. Note that the processing of Step S2054 can be omitted, in a case where no VM 50 is operating on the reduction logical host 31.

The unified resource management module 21 requests the cluster management module 22 to stop the logical host 31 configuring the target cluster 53 and the logical host 31 configuring the shared cluster 53 (Step S2055).

In a case of receiving the stop request, the cluster management module 22 stops the logical hosts 31 configuring each cluster 53 (Step S2056).

The cluster management module 22 reflects changes of the resource amounts of the clusters 53 to which the logical hosts 31 belong while the logical hosts 31 are stopped.

The unified resource management module 21 requests the server management module 23 to change the resource amount of the LPAR 51 corresponding to the reduction logical host 31 (Step S2057). This processing is the same as that of Step S2043.

In a case of receiving the request to change the resource amount, the server management module 23 changes the resource amount of the LPAR 51 corresponding to the reduction logical host 31 (Step S2058). This processing is the same as that of Step S2044. At this time, the information in the configuration column 284 of the server table 28 of an entry corresponding to the LPAR 51 is updated by the server management module 23.

The unified resource management module 21 requests the server management module 23 to change the resource amount of the LPAR 51 corresponding to the addition logical host 31 (Step S2059). This processing is the same as that of Step S2047.

In a case of receiving the request to change the resource amount, the server management module 23 changes the resource amount allocation of the LPAR 51 corresponding to the addition logical host 31 (Step S2060). This processing is the same as that of Step S2048.

The unified resource management module 21 requests the server management module 23 to start the LPAR 51 corresponding to the addition logical host 31 and the LPAR 51 corresponding to the reduction logical host 31 (Step S2061).

In a case of receiving the start request, the server management module 23 starts the LPARs 51 corresponding to each logical host 31 (Step S2062).

In this way, the logical host 31 configuring the target cluster 53 and the logical host 31 configuring the shared cluster 53 are started.

Note that, after the logical hosts 31 are started, the cluster management module 22 reflects changes in the resource amounts of the clusters 53 to which these logical hosts 31 belong on the cluster table 27.

[Third Embodiment]

A third embodiment differs from the first embodiment in that the resource amount allocated to the LPAR 51 is changed by moving the LPAR 51 to another server 40. The following description is centered on differences from the first embodiment.

The configuration of the computer system in the third embodiment is not described since being the same as in the first embodiment. Further, the hardware and software configurations of the management server 10 and the servers 40 are not described since being the same as in the first embodiment. Further, the configurations of the physical hosts 30 and the logical hosts 31 are also not described since being the same as in the first embodiment.

Furthermore, the resource monitoring process is also not described since being the same as in the first embodiment.

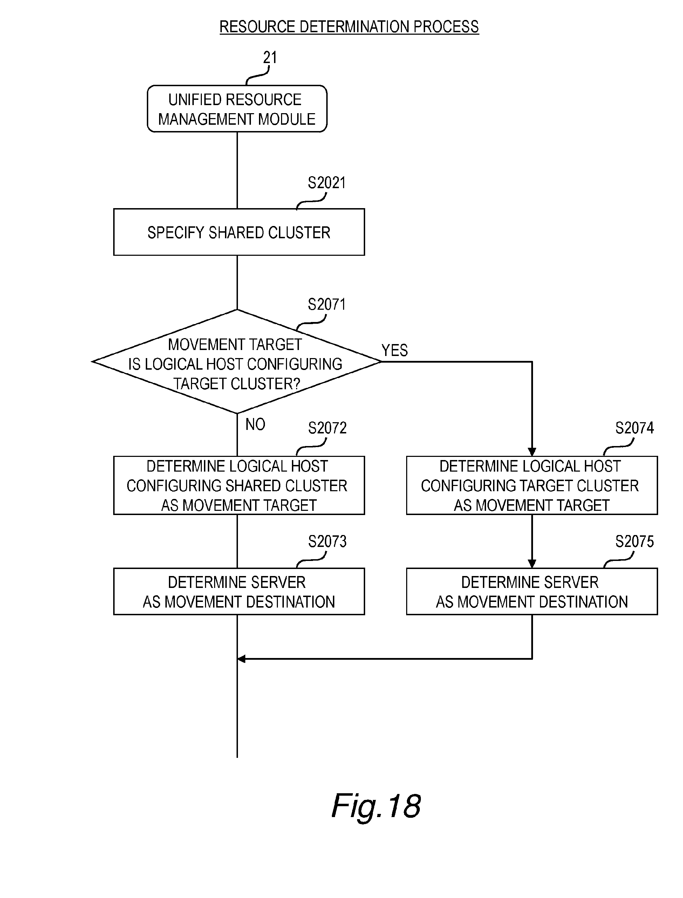

FIG. 18 is a flow chart illustrating a resource determination process according to the third embodiment of the present invention.

The unified resource management module 21 specifies the shared cluster 53 sharing the physical resources of the same server 40 as the target cluster 53 (Step S2021).

The unified resource management module 21 determines whether or not a movement target is the logical host configuring the target cluster 53 (Step S2071). Here, the movement target means the logical host 31 in which the LPAR 51 corresponding to the logical host 31 is moved to another server 40 at the time of performing the resource changing process. Specifically, the following determination process is performed.

First, the unified resource management module 21 determines whether or not there is any shared cluster 53.

In a case where the absence of the shared cluster 53 is determined, the unified resource management module 21 determines that the movement target is not the logical host 31 configuring the shared cluster 53.

In a case where the presence of the shared cluster 53 is determined, the unified resource management module 21 determines whether or not the logical host 31 configuring the shared cluster 53 is movable.

The unified resource management module 21 performs the determination process based on a predetermined reference value or based on a comparison result of the resource utilization rate of the shared cluster 53 and those of the other clusters 53. Further, the administrator may select whether or not to move the logical host 31 configuring the shared cluster 53 using a UI or the like.

In a case where the logical host 31 configuring the shared cluster 53 is movable, the unified resource management module 21 determines the movement target is the logical host 31 configuring the shared cluster 53.

In a case where the movement target is determined to be the logical host 31 configuring the shared cluster 53, the unified resource management module 21 determines the logical host 31 that will become a movement target from the logical hosts 31 configuring the shared cluster 53 (Step S2072).

In a case where the shared cluster 53 is composed of a plurality of logical hosts 31, the unified resource management module 21 may select the logical host 31 with the highest resource utilization rate or the logical host 31 corresponding to the LPAR 51 with the smallest resource amount as the movement target. The present invention is not limited to the determination method described above and the logical host 31 that will become a movement target may be determined based on another criterion.

The unified resource management module 21 determines the server 40 as a movement destination of the logical host 31 determined as the movement target (Step S2073).

A method for detecting the server 40 as the movement destination is thought to be a method for selecting the server 40 having unused resources equal to or more than the resource amounts (in the configuration column 284) of the LPAR 51 corresponding to the logical host 31 as the movement target.

Note that the unused resource amount of the server 40 can be calculated by subtracting the total value in the configuration column 284 of each LPAR 51 generated on the servers 40 from the information in the spec information column 282 of the server table 28.

For example, in FIG. 6, the unused resource amount of the server 40 identified to be "S1" in the server column 281 is calculated to be "2 GHzx2" for the CPU, "128 GB" for the memory and "10 Gb CNA×2" for the I/O device.

Note that the server management module 23 may have the unused resource amount of each server 40 calculated in advance.

The server 40 that did not execute the logical partitioning program 70 in Step S2073, i.e. the server 40 on which no logical host 31 is operating, may be excluded from candidates for the server 40 as the movement destination. In a case where this server 40 is not excluded from the candidates for the server 40 as the movement destination, the unified resource management module 21 instructs this server 40 to execute the logical partitioning program 70.

At this time, the server 40 executes the logical partitioning program 70 to generate the LPAR 51. Further, the server 40 converts the physical host 30 that has been operating on this server 40 into a logical host 31 corresponding to the generated LPAR 51. Thereafter, the unified resource management module 21 performs the processing of Step S2073.

Note that the server 40 that does not include the logical partitioning program 70 may be made a candidate for the server 40 as the movement destination by moving the VM 50 in operation to the LPAR 51 of the same or different server 40.

In a case where the movement target is determined to be the logical host 31 configuring the target cluster 53 in Step S2071, the unified resource management module 21 determines the logical host 31 that will become a movement target from the logical hosts 31 configuring the target cluster 53 (Step S2074).

Note the same method as in Step S2072 may be used as a method for determining the logical host 31 that will become a movement target.

The unified resource management module 21 determines the server 40 as the movement destination of the logical host 31 determined as the movement target (Step S2075).

A method for selecting the server 40 having the unused resource equal to or more than the value obtained by adding the resource change amount D to the resource amount (in the configuration column 284) allotted to the LPAR 51 corresponding to the logical host 31 that will become a movement target can be considered as a method for determining the server 40 as the movement destination.

Note that the server 40 that has not executed the logical partitioning program 70 may be excluded from candidates for the server 40 as the movement destination.

In a case where this server 40 is not excluded from the candidates for the server 40 as the movement destination, the unified resource management module 21 instructs this server 40 to execute the logical partitioning program 70. At this time, the server 40 generates the LPAR 51 by executing the logical partitioning program 70. Further, the server 40 converts the physical host 30 operating on this server 40 into a logical host 31 corresponding to the generated LPAR 51. Thereafter, the unified resource management module 21 performs the processing of Step S2075.

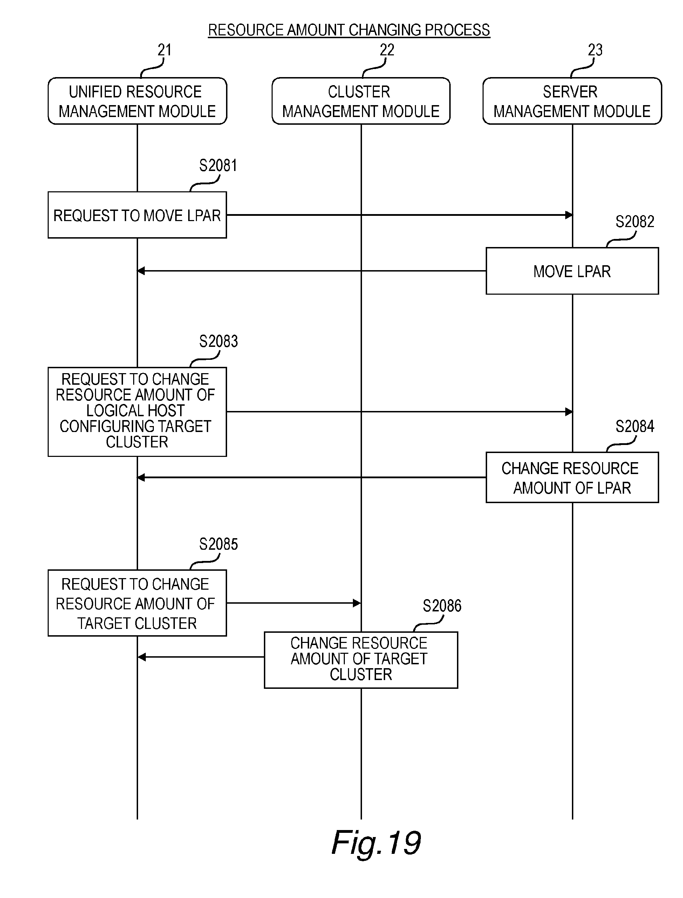

FIG. 19 is a sequence diagram illustrating a resource changing process according to the third embodiment of the present invention.

The unified resource management module 21 requests the server management module 23 to move the LPAR 51 corresponding to the logical host 31 determined as the movement target (Step S2081).

The movement request includes the identifier of the LPAR 51 corresponding to the logical host 31 determined as the movement target and that of the server 40 as the movement destination.

In a case of receiving the movement request, the server management module 23 performs a processing of moving the LPAR 51 corresponding to the logical host 31 as the movement target (Step S2082).

Here, a method for moving the LPAR 51 without stopping the virtualization program 60 and the VMs 50 executed on the LPAR 51 is thought as a method for moving the LPAR 51. Further, after the LPAR 51 is stopped and moved to the server 40 as the movement destination, the LPAR 51 may be started again. Note that, in the case of stopping the LPAR 51, the VM 50 operating on the logical host 31 corresponding to this LPAR 51 is preferably moved to another host.

The unified resource management module 21 requests the server management module 23 to change the resource amount allocation to the LPAR 51 corresponding to the logical host 31 configuring the target cluster 53 (Step S2083).

Here, the logical host 31 whose resource amount is to be changed differs depending on the logical host 31 as the movement target.

In a case where the movement target is the logical host 31 configuring the shared cluster 53, the resource amount of the LPAR 51 corresponding to the other logical host 31 present on the same server 40 as the logical host 31 as the movement target is to be changed.

On the other hand, in a case where the movement target is the logical host 31 configuring the target cluster, the resource amount of the LPAR 51 corresponding to the logical host 31 as the movement target is to be changed.

In a case of receiving the change request, the server management module 23 changes the resource amount of the corresponding LPAR 51 (Step S2084).

Specifically, the resource amount of the LPAR 51 to be changed is added by the resource change amount D.

The unified resource management module 21 requests the cluster management module 22 to change the resource amount of the target cluster 53 (Step S2085). This change request includes the value of the resource change amount D.

In a case of receiving the change request, the cluster management module 22 changes the resource amount of the target cluster 53 (Step S2086).

Specifically, the resource amount of the target cluster 53 is changed to a value calculated by adding the resource change amount D. At this time, the cluster management module 22 updates the information in the cluster resource column 272 of an entry corresponding to the target cluster 53 by referring to the cluster table 27. That is, a change of the resource amount added to the LPAR 51 is reflected.

Note that, in a case where the cluster management module 22 automatically performs the processing of Step S2086 after performing the processing of Step S2084, the processing of Step S2085 can be omitted. That is, the processing of Step S2085 can be omitted, in a case where the server management module 23 includes an API used to notify a change in the resource amount of the LPAR 51 to the cluster management module 22.

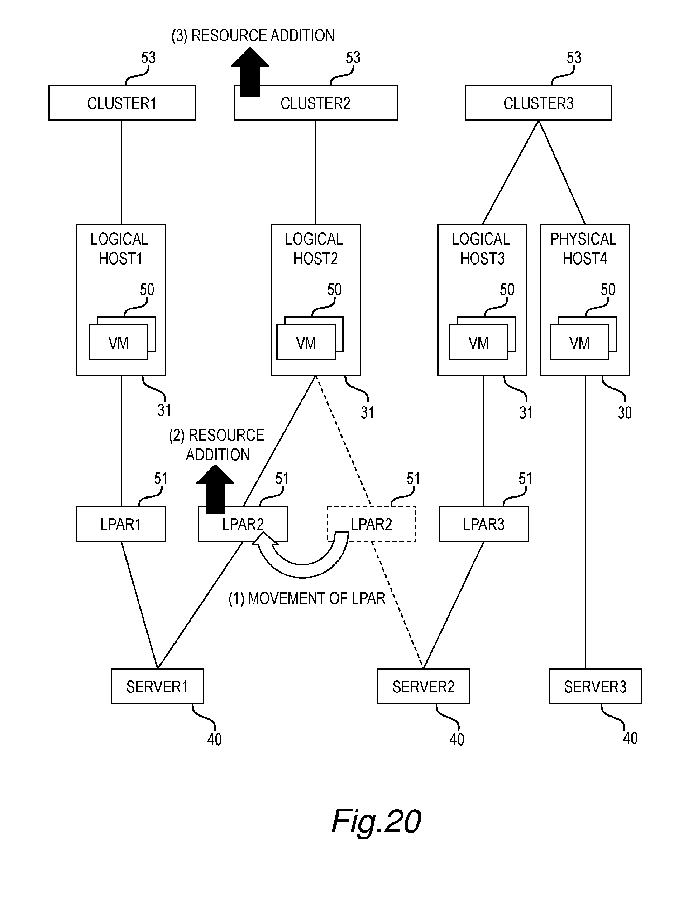

FIG. 20 is a diagram illustration outline of the resource changing process according to the third embodiment of the present invention.

In FIG. 20, the resource changing process is outlined, in a case where a cluster 2 is the target cluster 53, a logical host 2 is the logical host 31 is the movement target and a server 1 is the server 40 as a movement destination.

In Step S2082, an LPAR 2 corresponding to the logical host 2 is moved from a server 2 to the server 1.

In Step S2084, the resource amount of the LPAR 2 moved to the server 1 is added by the resource change amount D.

In Step S2086, an addition of the resource amount of the LPAR 2 is reflected as an increase of the resource amount of the cluster 2.

[Modification of the Third Embodiment]

In the resource determination process of the third embodiment, the logical host 31 not belonging to the clusters 53 may be selected as the shared cluster 53 whose resource amount is to be changed. In this case, the resource determination process is performed as follows.

In Step S2021, the logical host 31 that corresponds to the LPAR 51 generated on the same server 40 as the LPAR 51 corresponding to the logical host 31 belonging to the target cluster 53 and does not belong to the clusters 53 is selected as the shared cluster 53. The other processings are not described since being the same.

Further, the resource changing process is not described since being the same as in the third embodiment.

According to one embodiment of the present invention, the resource amount of the cluster 53 can be changed according to the loads of the hosts without increasing or decreasing the number of the hosts configuring the cluster 53 by providing the cluster 53 composed of the logical hosts 31.

The followings are typical aspects of the present invention other than those stated in the claims.

(1) A resource management method executed in a computer system including a plurality of computers which provide a plurality of hosts for executing a virtualization program for managing virtual machines and a management computer which is coupled to each of the plurality of computers via a network and manages the plurality of computers, wherein:

each of the plurality of computer has a first processor, a first memory coupled to the first processor and a first I/O interface coupled to the first processor;
the management computer has a second processor, a second memory coupled to the second processor and a second I/O interface coupled to the second processor;
the hosts include physical hosts in which the first processor executes the virtualization program and logical hosts in which a processor executes the virtualization program, which is allocated to a logical partition generated by logically partitioning physical resources of one of the plurality of computers;
the management computer has a resource management unit for managing resources of clusters including a plurality of the hosts as one resource group;
the clusters includes at least one or more complex clusters composed of one or more of the physical hosts and one or more of the logical hosts;
the resource management method including;

a first step of specifying, by the resource management unit, a target logical host configuring the complex cluster, in a case where physical resources for distributing loads of the hosts configuring the complex cluster are insufficient, and

a second step of changing, by the resource management unit, the allocated amount of the physical resources to the target logical host.

(2) The resource management method according to (1):

wherein: the management computer has a cluster management unit which configures the clusters and manages the clusters, and a logical partition management unit which manages the logical partition generated on each computer; and

wherein the second step includes;

a step of specifying, by the resource management unit, another logical partition whose allocation of the physical resources is changeable,

a step of transmitting, by the resource management unit, a request to change the physical resources allocated to the other logical partition to the logical partition management unit,

a step of reducing, by the logical partition management unit, the physical resources allocated to the other logical partition by a predetermined amount,

a step of transmitting, by the resource management unit, a request to change the physical resources allocated to the logical partition corresponding to the target logical host to the logical partition management unit, and

a step of adding, by the logical partition management unit, the predetermined amount of the physical resources to the logical partition corresponding to the target logical host.

(3) The resource management method according to (1):

wherein the management computer further includes a cluster management unit which configures the clusters and manages the clusters, and a logical partition management unit which manages the logical partition generated on each of the plurality of computers; and

wherein the second step includes;

a step of transmitting, by the resource management unit, a request to move the logical partition corresponding to the target logical host to the logical partition management unit,

a step of moving, by the logical partition management unit, the logical partition corresponding to the target logical host to another computer,

a step of transmitting, by the resource management unit, a request to change the physical resources allocated to the logical partition corresponding to the target logical host, and

a step of adding, by the logical partition management unit, a predetermined amount of the physical resources to the logical partition corresponding to the target logical host.

(4) The resource management method according to (2) or (3):

wherein further including;

a step of transmitting, by the logical partition management unit, a change result to the cluster management unit after the physical resources of the logical partition corresponding to the target logical host are changed, and

a step of reflecting, by the cluster management unit, the change result of the physical resources of the logical partition corresponding to the target logical host.

(5) A computer system, comprising:

a plurality of computers which provide a plurality of hosts for executing a virtualization program for managing virtual machines and a management computer which is coupled to each of the plurality of computer via a network and manages the plurality of computers,

wherein each computer has a first processor, a first memory coupled to the first processor and a first I/O interface coupled to the first processor;

wherein the management computer has a second processor, a second memory coupled to the second processor and a second I/O interface coupled to the second processor;

wherein the hosts include physical hosts in which the first processor executes the virtualization program and logical hosts in which a processor executes the virtualization program, which is allocated to a logical partition generated by logically partitioning physical resources of one of the plurality of computers;

wherein the management computer has a resource management unit for managing resources of clusters including a plurality of the hosts as one resource group;

wherein the clusters include at least one complex clusters composed of at least one of the physical hosts and at least one of the logical hosts; and

wherein the resource management unit is configured to:

specify a target logical host configuring the complex cluster, in a case where physical resources for distributing loads of the hosts configuring the complex cluster are insufficient, and

change the allocated amount of the physical resources to the target logical host.

(6) The computer system according to (5):

wherein the management computer has a cluster management unit which configures the clusters and manages the clusters, and a logical partition management unit which manages the logical partition generated on each computer;

wherein the resource management unit specifies another logical partition whose allocation of the physical resources is changeable, in a case where the allocated amount of the physical resources to the target logical host is changed;

wherein the resource management unit transmits a request to change the physical resources allocated to the other logical partition to the logical partition management unit;

wherein the logical partition management unit reduces the physical resources allocated to the other logical partition by a predetermined amount;

wherein the resource management unit transmits a request to change the physical resources allocated to the logical partition corresponding to the target logical host to the logical partition management unit; and

wherein the logical partition management unit adds the predetermined amount of the physical resources to the logical partition corresponding to the target logical host.

(7) The computer system according to (5):

wherein the management computer further includes a cluster management unit which configures the clusters and manages the clusters, and a logical partition management unit which manages the logical partition generated on each of the plurality of computers;

wherein the resource management unit transmits a request to move the logical partition corresponding to the target logical host to the logical partition management unit, in a case where the allocated amount of the physical resources to the target logical host is changed;

wherein the logical partition management unit moves the logical partition corresponding to the target logical host to another computer;

wherein the resource management unit transmits a request to change the physical resources allocated to the logical partition corresponding to the target logical host; and

wherein the logical partition management unit adds a predetermined amount of the physical resources to the logical partition corresponding to the target logical host.

(8) The computer system according to (6) or (7):

wherein the logical partition management unit transmits a change result to the cluster management unit after the physical resources of the logical partition corresponding to the target logical host are changed; and

wherein the cluster management unit reflects the change result of the physical resources of the logical partition corresponding to the target logical host.

While the present invention has been described in detail and pictorially in the accompanying drawings, the present invention is not limited to such detail but covers various obvious modifications and equivalent arrangements, which fall within the purview of the appended claims.

**Claims**

1.  A resource management method executed in a computer system including a plurality of computers which provide a plurality of hosts for executing a virtualization program for managing virtual machines; and a management computer which is coupled to each of the plurality of computers via a network and manages the plurality of computers, wherein:

    each of the plurality of computers has a first processor, a first memory coupled to the first processor and a first I/O interface coupled to the first processor;
    the management computer has a second processor, a second memory coupled to the second processor and a second I/O interface coupled to the second processor;
    the hosts include physical hosts in which the first processor executes the virtualization program and logical hosts in which a processor executes the virtualization program, which is allocated to a logical partition generated by logically partitioning physical resources of one of the plurality of computers;
    the management computer has a resource management unit for managing physical resources of clusters composed of a plurality of the hosts;
    the clusters include at least one complex clusters composed of at least one of the physical hosts and at least one of the logical hosts; and
    the resource management method including;

    a first step of specifying, by the resource management unit, a target logical host configuring the complex cluster, in a case where physical resources for distributing loads of the hosts configuring the complex cluster are insufficient, and
    a second step of changing, by the resource management unit, the allocated amount of the physical resources to the target logical host.

2.  The resource management method according to claim 1:

    wherein the management computer has a cluster management unit which configures the clusters and manages the clusters, and a logical partition management unit which manages the logical partition generated on each of the plurality of computers; and
    wherein the first step includes;

    a third step of obtaining, by the cluster management unit, load information of the physical hosts,
    a fourth step of obtaining, by the logical partition management unit, load information of the logical hosts corresponding to the logical partitions,
    a fifth step of obtaining, by the resource management unit, the load information of the physical hosts and the load information of the logical hosts and calculating a load value indicating a load in the complex cluster, and
    a sixth step of specifying, by the resource management unit, a first complex cluster, in which the physical resources for distributing the loads of the hosts are insufficient, based on the calculated load value.

3.  The resource management method according to claim 2:

    wherein the load information of the physical host is a first resource utilization rate indicating a utilization rate of the physical resources of one of the plurality of computers used by the virtual machine operating on the physical host;
    wherein the load information of the logical host is a second resource utilization rate indicating a utilization rate of the physical resources allocated to the logical partition used by the virtual machine operating on the logical host;
    wherein the load value is a third resource utilization rate indicating a utilization rate of the physical resources of the cluster; and
    wherein the sixth step includes the step of calculating the third resource utilization rate based on the obtained first resource utilization rate and the obtained second resource utilization rate.

4.  The resource management method according to claim 2:

    wherein the resource management unit has configuration information used to manage the configurations of the clusters; and
    wherein the fifth step includes the steps of;

specifying the physical hosts and the logical hosts configuring the first complex cluster by referring to the configuration information,
transmitting a request to obtain the load information of the physical hosts including identification information of the specified physical hosts to the cluster management unit, and
transmitting a request to obtain the load information of the logical hosts including identification information of the specified logical hosts to the logical partition management unit.

5. The resource management method according to claim 1:

wherein the second step includes the steps of;

specifying another logical partition whose allocation of the physical resources is changeable,
reducing the physical resources allocated to the other logical partition by a predetermined amount, and
adding the predetermined amount of the physical resources to the logical partition corresponding to the target logical host.

6. The resource management method according to claim 5:

wherein the other logical partition, whose allocation of the physical resources is changeable, is the logical partition that is generated on the same computer on which the logical partition corresponding to the target logical host is generated and corresponds to the logical host configuring a second complex cluster different from the first complex cluster.

7. The resource management method according to claim 5:

wherein the other logical partition, whose allocation of the physical resources is changeable, is the logical partition corresponding to the logical host that does not configure the cluster.

8. The resource management method according to claim 1:

wherein the second step includes the step of moving the logical partition corresponding to the target logical host to another computer.

9. The resource management method according to claim 1:

wherein the second step includes the step of adding unused resources of one of the plurality of computers, on which the logical partition corresponding to the target logical host is generated, to this logical partition.

10. A computer system, comprising:

a plurality of computers which provide a plurality of hosts for executing a virtualization program for managing virtual machines, and
a management computer which is coupled to each of the plurality of computers via a network and manages the plurality of computers,
wherein each of the plurality of computers has a first processor, a first memory coupled to the first processor and a first I/O interface coupled to the first processor;
wherein the management computer has a second processor, a second memory coupled to the second processor and a second I/O interface coupled to the second processor;
wherein the hosts include physical hosts in which the first processor executes the virtualization program and logical hosts in which a processor executes the virtualization program, allocated to a logical partition generated by logically partitioning physical resources of one of the plurality of computers;
wherein the management computer has a resource management unit for managing physical resources of clusters composed of a plurality of the hosts;
wherein the clusters include at least one complex clusters composed of at least one of the physical hosts and at least one the logical hosts; and
wherein the resource management unit is configured to;

specify a target logical host configuring the complex cluster, in a case where physical resources for distributing loads of the hosts configuring the complex cluster are insufficient, and
change the allocated amount of the physical resources to the target logical host.

**11.** The computer system according to claim 10:

wherein: the management computer has a cluster management unit which configures the clusters and manages the clusters, and a logical partition management unit which manages the logical partition generated on each of the plurality of computers;
wherein the cluster management unit obtains load information of the physical hosts in a case of specifying the target cluster;
wherein the logical partition management unit obtains load information of the logical hosts corresponding to the logical partitions; and
wherein the resource management unit obtains the load information of the physical hosts and the load information of the logical hosts and calculates a load value indicating a load in the complex cluster, and specifies a first complex cluster, in which the physical resources for distributing the loads of the hosts are insufficient, based on the calculated load value.

**12.** The computer system according to claim 11:

wherein the load information of the physical host is a first resource utilization rate indicating a utilization rate of the physical resources of one of the plurality of computers used by the virtual machine operating on the physical host;
wherein the load information of the logical host is a second resource utilization rate indicating a utilization rate of the physical resources allocated to the logical partition used by the virtual machine operating on the logical host;
wherein the load value is a third resource utilization rate indicating a utilization rate of the physical resources of the cluster; and
wherein the third resource utilization rate is calculated based on the obtained first resource utilization rate and the obtained second resource utilization rate.

**13.** The computer system according to claim 11:

wherein the resource management unit has configuration information used to manage the configurations of the clusters;
wherein the resource management unit is configured to;

specify the physical hosts and the logical hosts configuring the first complex cluster by referring to the configuration information in a case of obtaining the load information of the physical hosts and the load information of the logical hosts,
transmit a request to obtain the load information of the physical hosts including identification information of the specified physical hosts to the cluster management unit, and
transmit a request to obtain the load information of the logical hosts including identification information of the specified logical hosts to the logical partition management unit.

**14.** The computer system according to claim 10:

wherein the resource management unit is configured to;

specify another logical partition whose allocation of the physical resources is changeable in a case of changing the allocated amount of the physical resource to the target logical host,
reduce the physical resources allocated to the other logical partition by a predetermined amount, and
add the predetermined amount of the physical resources to the logical partition corresponding to the target logical host.

**15.** The computer system according to claim 14:

wherein the other logical partition, whose allocation of the physical resources is changeable, is the logical partition that is generated on the same computer on which the logical partition corresponding to the target logical host is generated and corresponds to the logical host configuring a second complex cluster different from the first complex cluster.

16. The computer system according to claim 14:

wherein the other logical partition, whose allocation of the physical resources is changeable, is the logical partition corresponding to the logical host that does not configure the cluster.

17. The computer system according to claim 10:

wherein the resource management unit is configured to move the logical partition corresponding to the target logical host to another computer in a case of changing the allocated amount of the physical resources to the target logical host.

18. The computer system according to claim 10:

wherein the resource management unit is configured to add unused resources of one of the plurality of computers, on which the logical partition corresponding to the target logical host is generated, to this logical partition in a case of changing the allocated amount of the physical resources to the target logical host.

INPUT/OUTPUT DEVICE 15

MANAGEMENT SERVER 10

MEMORY 12

RESOURCE MANAGEMENT PROGRAM 20

CPU 11

NIC 13

16 MANAGEMENT NETWORK

90 RESOURCE POOL

PHYSICAL HOST 30

VM 50    VM 50

LOGICAL HOST 31

VM 50    VM 50

LPAR 51

LOGICAL HOST 31

VM 50    VM 50

LPAR 51

SERVER

SERVER

40

41 NETWORK DEVICE

40

45 STORAGE DEVICE

*Fig.1*

40

SERVER 42

MEMORY 60

VIRTUALIZATION PROGRAM

41

CPU

43

I/O DEVICE

*Fig.2A*

40

SERVER 42

MEMORY 60

VIRTUALIZATION PROGRAM

70

LOGICAL PARTITIONING PROGRAM

41

CPU

43

I/O DEVICE

*Fig.2B*

30

PHYSICAL HOST

50   50   50   50

VM   VM   VM   VM

60

VIRTUALIZATION PROGRAM

40

SERVER

*Fig.3A*

31                                    31

LOGICAL HOST                          LOGICAL HOST

50        50                    50        50

VM        VM                    VM        VM

60                                                          60

VIRTUALIZATION PROGRAM          VIRTUALIZATION PROGRAM

51                                                          51

LPAR                            LPAR

70

LOGICAL PARTITIONING PROGRAM

40

SERVER

*Fig.3B*

20

RESOURCE MANAGEMENT PROGRAM 21

UNIFIED RESOURCE MANAGEMENT MODULE

CONFIGURATION TABLE 25

22

CLUSTER MANAGEMENT MODULE

CLUSTER TABLE 27

23

SERVER MANAGEMENT MODULE

SERVER TABLE 28

*Fig.4*

*Fig.5*

SERVER TABLE

| SERVER | SPEC INFORMATION | LPAR | CONFIGURATION |
|---|---|---|---|
| S1 | CPU:2GHz x 4 MEM:256GB I/O:10Gb CNA x 4 | L1 | CPU:2GHz x 1 MEM:64GB I/O:10Gb CNA x 1 |
| | | L2 | CPU:2GHz x 1 MEM:64GB I/O:10Gb CNA x 1 |
| S2 | CPU:2GHz x 4 MEM:256GB I/O:10Gb CNA x 4 | - | - |
| S3 | CPU:2GHz x 4 MEM:256GB I/O:10Gb CNA x 4 | L3 | CPU:2GHz x 1 MEM:64GB I/O:10Gb CNA x 1 |
| | | L4 | CPU:2GHz x 1 MEM:64GB I/O:10Gb CNA x 1 |
| S4 | CPU:2GHz x 4 MEM:256GB I/O:10Gb CNA x 4 | - | - |
| S5 | CPU:2GHz x 4 MEM:256GB I/O:10Gb CNA x 4 | L5 | CPU:2GHz x 1 MEM:64GB I/O:10Gb CNA x 1 |
| | | L6 | CPU:2GHz x 1 MEM:64GB I/O:10Gb CNA x 1 |
| --- | | | |

281    282    283    284    28

*Fig.6*

CLUSTER TABLE

| CLUSTER | CLUSTER RESOURCE | HOST | VM |
|---------|------------------|------|-----|
| C1 | CPU:10GHz MEM:320GB I/O:10Gb CNA x 5 | H1 | VM1,VM2 |
| | | H2 | VM3 |
| C2 | CPU:12GHz MEM:384GB I/O:10Gb CNA x 6 | H3 | VM4,VM5 |
| | | H4 | VM6,VM7 |
| | | H5 | VM8,VM9 |
| C3 | CPU:6GHz MEM:192GB I/O:10Gb CNA x 3 | H6 | VM10 |
| n/a | n/a | H7 | VM13,VM14 |
| n/a | n/a | H8 | VM15,VM16 |
| --- | --- | | |

271  272  273  274  27

*Fig.7*

CONFIGURATION TABLE

| CLUSTER | HOST | SERVER | LPAR |
|---------|------|--------|------|
| C1 | H1 | S1 | L1 |
| | H2 | S2 | - |
| C2 | H3 | S1 | L2 |
| | H4 | S3 | L3 |
| | H5 | S4 | - |
| C3 | H6 | S3 | L4 |
| (H7) | H7 | S5 | L5 |
| (H8) | H8 | S5 | L6 |
| --- | | | |

*Fig.8*

START

PHYSICAL RESOURCE
MONITORING PROCESS — S201

RESOURCE DETERMINATION
PROCESS — S202

S203

NO ← RESOURCE AMOUNT CHANGEABLE?

YES

RESOURCE AMOUNT
CHANGING PROCESS — S204

*Fig.9*

PHYSICAL RESOURCE MONITORING PROCESS

Fig.10

EP 2 511 822 A2

```
                    22                                    23
        ┌─────────────────────┐              ┌─────────────────────┐
        │  CLUSTER MANAGEMENT  │              │  SERVER MANAGEMENT   │
        │       MODULE         │              │       MODULE         │
        └─────────────────────┘              └─────────────────────┘
                    │                                    │
                    ▼                                    ▼
        ┌─────────────────────┐              ┌─────────────────────┐
        │ RESOURCE UTILIZATION │              │ RESOURCE UTILIZATION │
        │  RATE OF PHYSICAL    │              │    RATE OF LPAR      │
        │      HOST            │              │       (Vj)           │
        │      (Ui)            │              │                      │
        └─────────────────────┘              └─────────────────────┘
                    │                                    │
                    ▼                                    ▼
```

$$
\text{ACTUAL RESOURCE UTILIZATION RATE OF CLUSTER } (R_k) = \frac{\substack{\text{SUM OF RESOURCE UTILIZATION RATES OF ALL PHYSICAL HOSTS IN CLUSTER} \\ (\sum U_i)} + \substack{\text{SUM OF RESOURCE UTILIZATION RATES OF ALL LOGICAL HOSTS IN CLUSTER} \\ (\sum V_j)}}{\substack{\text{NUMBER OF PHYSICAL HOSTS IN CLUSTER} \\ (n)} + \substack{\text{NUMBER OF LOGICAL HOSTS IN CLUSTER} \\ (m)}} \quad \ldots(1)
$$

*Fig.11*

RESOURCE DETERMINATION PROCESS

21

┌─────────────────────┐
│ UNIFIED RESOURCE    │
│ MANAGEMENT MODULE   │
└─────────────────────┘

S2021

┌─────────────────────────────────────┐
│        SPECIFY SHARED CLUSTER        │
└─────────────────────────────────────┘

S2022

┌─────────────────────────────────────┐
│  DETERMINE LOGICAL HOST WHOSE        │
│  RESOURCE AMOUNT IS TO BE CHANGED    │
└─────────────────────────────────────┘

*Fig.12*

RESOURCE AMOUNT CHANGING PROCESS

| 21 | 22 | 23 |
|---|---|---|
| UNIFIED RESOURCE MANAGEMENT MODULE | CLUSTER MANAGEMENT MODULE | SERVER MANAGEMENT MODULE |

S2041

REQUEST TO MOVE VMS OPERATING ON LOGICAL HOST CONFIGURING SHARED CLUSTER

S2042

MOVE AT LEAST ONE VMS

S2043

REQUEST TO CHANGE RESOURCE AMOUNT OF LPAR

S2044

CHANGE RESOURCE AMOUNT OF LPAR

S2045

REQUEST TO CHANGE RESOURCE AMOUNT OF SHARED CLUSTER

S2046

CHANGE RESOURCE AMOUNT OF SHARED CLUSTER

S2047

REQUEST TO CHANGE RESOURCE ALLOCATION AMOUNT OF LOGICAL HOST CONFIGURING TARGET CLUSTER

S2048

CHANGE RESOURCE AMOUNT OF LPAR

S2049

REQUEST TO CHANGE RESOURCE AMOUNT OF TARGET CLUSTER

S2050

CHANGE RESOURCE AMOUNT OF TARGET CLUSTER

*Fig.13*

(4) RESOURCE
ADDITION

(2) RESOURCE
REDUCTION

53

53

53

CLUSTER1

CLUSTER2

CLUSTER3

PHYSICAL
HOST 2

LOGICAL
HOST 1

LOGICAL
HOST 3

PHYSICAL
HOST 5

LOGICAL
HOST 4

LOGICAL
HOST 6

50

50

50

50

50

50

VM

VM

VM

VM

VM

VM

30

31

31

30

31

31

(3) RESOURCE
ADDITION

(1) RESOURCE
REDUCTION

51

51

51

51

LPAR1

LPAR2

LPAR3

LPAR4

SERVER2

SERVER1

SERVER4

SERVER3

40

40

40

40

*Fig.14*

UNUSED RESOURCE TABLE

291                          292            29

| SERVER | UNUSED RESOURCE |
|--------|-----------------|
| S1 | CPU:2GHz x 2<br>MEM:128GB<br>I/O:10Gb CNA x 2 |
| S2 | --- |
| S3 | CPU:2GHz x 2<br>MEM:128GB<br>I/O:10Gb CNA x 2 |
| S4 | --- |
| S5 | CPU:2GHz x 2<br>MEM:128GB<br>I/O:10Gb CNA x 2 |
| --- |  |

*Fig.15*

RESOURCE DETERMINATION PROCESS

21

UNIFIED RESOURCE
MANAGEMENT MODULE

S2901

SPECIFY LOGICAL HOST
CONFIGURING TARGET CLUSTER

S2902

SPECIFY SERVER

S2903

DETERMINE LOGICAL HOST WHOSE
RESOURCE AMOUNT IS TO BE CHANGED

*Fig.16*

RESOURCE AMOUNT CHANGING PROCESS

21
UNIFIED RESOURCE
MANAGEMENT MODULE

22
CLUSTER
MANAGEMENT MODULE

23
SERVER
MANAGEMENT MODULE

S2051
REQUEST TO MOVE ALL VMS
OPERATING ON LOGICAL
HOST CONFIGURING
TARGET CLUSTER

S2052
MOVE ALL VMS

S2053
REQUEST TO MOVE ALL VMS
OPERATING ON LOGICAL
HOST CONFIGURING
SHARED CLUSTER

S2054
MOVE ALL VMS

S2055
REQUEST TO STOP
LOGICAL HOST

S2056
STOP LOGICAL HOST

S2057
REQUEST TO CHANGE
RESOURCE
AMOUNT OF LPAR

S2058
CHANGE RESOURCE
AMOUNT OF LPAR

S2059
REQUEST TO CHANGE
RESOURCE AMOUNT
OF LOGICAL HOST
CONFIGURING
TARGET CLUSTER

S2060
CHANGE RESOURCE
AMOUNT OF LPAR

S2061
REQUEST TO START
LPAR

S2062
START LPAR

*Fig.17*

RESOURCE DETERMINATION PROCESS

```
                        21
              ┌──────────────────────┐
              │  UNIFIED RESOURCE    │
              │  MANAGEMENT MODULE   │
              └──────────────────────┘
                        │
                        │              S2021
              ┌──────────────────────────────┐
              │    SPECIFY SHARED CLUSTER     │
              └──────────────────────────────┘
                        │
                        │              S2071
                    ◇─────────────◇
              MOVEMENT TARGET                   YES
        IS LOGICAL HOST CONFIGURING  ──────────────────────┐
             TARGET CLUSTER?                                │
                    ◇─────────────◇                         │
                        │ NO   S2072                        │  S2074
        ┌──────────────────────────────┐   ┌──────────────────────────────┐
        │  DETERMINE LOGICAL HOST      │   │  DETERMINE LOGICAL HOST      │
        │  CONFIGURING SHARED CLUSTER  │   │  CONFIGURING TARGET CLUSTER  │
        │  AS MOVEMENT TARGET          │   │  AS MOVEMENT TARGET          │
        └──────────────────────────────┘   └──────────────────────────────┘
                        │  S2073                            │  S2075
        ┌──────────────────────────────┐   ┌──────────────────────────────┐
        │  DETERMINE SERVER            │   │  DETERMINE SERVER            │
        │  AS MOVEMENT DESTINATION     │   │  AS MOVEMENT DESTINATION     │
        └──────────────────────────────┘   └──────────────────────────────┘
                        │◀──────────────────────────────────┘
                        │
                        ▼
```

*Fig.18*

RESOURCE AMOUNT CHANGING PROCESS

| 21 | 22 | 23 |
|---|---|---|
| UNIFIED RESOURCE MANAGEMENT MODULE | CLUSTER MANAGEMENT MODULE | SERVER MANAGEMENT MODULE |

S2081

REQUEST TO MOVE LPAR

S2082

MOVE LPAR

S2083

REQUEST TO CHANGE RESOURCE AMOUNT OF LOGICAL HOST CONFIGURING TARGET CLUSTER

S2084

CHANGE RESOURCE AMOUNT OF LPAR

S2085

REQUEST TO CHANGE RESOURCE AMOUNT OF TARGET CLUSTER

S2086

CHANGE RESOURCE AMOUNT OF TARGET CLUSTER

*Fig.19*

(3) RESOURCE ADDITION

53                    53                    53

| CLUSTER1 | | CLUSTER2 | | CLUSTER3 |

| LOGICAL HOST1 | | LOGICAL HOST2 | | LOGICAL HOST3 | | PHYSICAL HOST4 |

50    50    50    50

VM    VM    VM    VM

31    31    31    30

(2) RESOURCE ADDITION

51    51    51    51

| LPAR1 | | LPAR2 | | LPAR2 | | LPAR3 |

(1) MOVEMENT OF LPAR

| SERVER1 | | SERVER2 | | SERVER3 |

40    40    40

*Fig.20*

**EP 2 511 822 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011091045 A
- JP 2009003749 A